(19) **Europäisches Patentamt / European Patent Office / Office européen des brevets**

(11) **EP 2 269 022 B1**

(12) **FASCICULE DE BREVET EUROPEEN**

(45) Date de publication et mention de la délivrance du brevet:
**26.12.2018 Bulletin 2018/52**

(21) Numéro de dépôt: **09745965.5**

(22) Date de dépôt: **17.04.2009**

(51) Int Cl.:
***G01M 3/00*** *(2006.01)*

(86) Numéro de dépôt international:
**PCT/FR2009/050723**

(87) Numéro de publication internationale:
**WO 2009/138646 (19.11.2009 Gazette 2009/47)**

(54) **SYSTEME POUR OBTENIR DES INFORMATIONS RELATIVEMENT A UNE CANALISATION ET PROCEDE ASSOCIE**

SYSTEM ZUR GEWINNUNG VON INFORMATIONEN ÜBER RÖHREN UND ENTSPRECHENDES VERFAHREN

SYSTEM FOR OBTAINING INFORMATION RELATED TO PIPES, AND RELATED METHOD

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **22.04.2008 FR 0852712**

(43) Date de publication de la demande:
**05.01.2011 Bulletin 2011/01**

(73) Titulaire: **SOLETANCHE FREYSSINET**
**92500 Rueil Malmaison (FR)**

(72) Inventeurs:
 • **STUBLER, Jérôme**
   **F-75016 Paris (FR)**
 • **BASILE, Bernard**
   **F-78370 Plaisir (FR)**
 • **HOVHANESSIAN, Gilles**
   **F-92160 Antony (FR)**

(74) Mandataire: **Cabinet Plasseraud**
   **66, rue de la Chaussée d'Antin**
   **75440 Paris Cedex 09 (FR)**

(56) Documents cités:
| | |
|---|---|
| EP-A- 0 442 626 | EP-A- 0 450 814 |
| EP-A- 0 862 682 | EP-A2- 1 333 221 |
| WO-A-97/42691 | FR-A- 2 556 832 |
| GB-A- 2 379 015 | JP-A- 60 257 338 |
| US-A- 2 940 302 | US-A- 4 485 668 |
| US-A- 4 747 317 | US-A- 5 203 646 |
| US-B1- 7 231 812 | |

## Description

La présente invention concerne l'obtention d'informations relativement à une canalisation transportant un flux de fluide et/ou relativement au fluide.

Ces informations peuvent concerner, de façon non exclusive, la détection de fuite dans la canalisation et/ou de caractéristiques de ladite canalisation ou du fluide.

Il est connu, pour une détection de fuite par exemple, d'analyser le bruit provoqué par cette fuite à l'intérieur de la canalisation.

Selon la solution Sahara (marque déposée) développée par la société WRc, un capteur acoustique est introduit dans la canalisation considérée par l'intermédiaire d'un point d'accès, puis circule à l'intérieur de la canalisation, poussé par le flux de fluide.

Un câble est relié par une de ses extrémités à ce capteur acoustique. Il permet d'une part la transmission en temps réel des données acoustiques captées par le capteur acoustique à un système d'analyse situé à son autre extrémité, et d'autre part la fourniture de l'énergie électrique nécessaire pour alimenter le capteur acoustique.

La position du capteur acoustique est par ailleurs suivie à tout moment, au cours de sa circulation à l'intérieur de la canalisation, par la mesure de la longueur du câble introduit dans cette canalisation à la suite du capteur acoustique, ainsi que par la détection, par un opérateur en surface équipé d'un système approprié, d'un signal émis par le capteur acoustique.

L'analyse en temps réel des données acoustiques captées et la localisation continue du capteur acoustique permettent ainsi de détecter une éventuelle fuite de fluide dans la canalisation ainsi que sa position géographique.

Du fait de ses caractéristiques rappelées ci-dessus, le câble relié au capteur acoustique doit avoir une constitution appropriée et un diamètre et donc une raideur relativement importants.

Or la nécessité d'un tel diamètre génère des frottements significatifs du câble avec le fluide et avec l'intérieur de la canalisation, surtout dans les zones non linéaires de la canalisation.

Elle limite par conséquent la longueur maximale de câble pouvant être insérée dans la canalisation à environ 1 km. Au-delà de cette longueur, en effet, on considère que la force générée par les frottements du câble dans la canalisation devient supérieure à la force propulsive du capteur acoustique résultant de la vitesse du fluide, ce qui empêche la progression du capteur acoustique à l'intérieur de la canalisation.

Dans le document EP0450814 est décrit une sonde pour inspecter une canalisation qui est reliée mécaniquement et électriquement à une station d'observation située à l'extérieur de la canalisation. Le document GB2379015 présente une sonde similaire. Le document FR2556832 décrit une sonde pour inspecter une canalisation sans aucun lien mécanique ou électrique avec l'extérieur. Le document US7231812 décrit une sonde pour inspecter une canalisation avec uniquement un lien mécanique avec l'extérieur et comprenant une balise de position.

Un but de la présente invention est de permettre d'obtenir des informations relativement à une canalisation, tout en limitant les inconvénients susmentionnés.

L'invention propose ainsi un système pour obtenir des informations relativement à une canalisation transportant un flux de fluide et/ou relativement au fluide. Ce système comprend :

- un module autonome en termes d'enregistrement de données et d'alimentation en énergie, comprenant des moyens d'acquisition de données dont une analyse postérieure permet l'obtention d'informations relativement à la canalisation et/ou au fluide et des moyens de mémorisation des données acquises par lesdits moyens d'acquisition de données, le module autonome étant agencé pour être poussé par le flux de fluide après avoir été introduit à l'intérieur de la canalisation, et

- un lien mécanique relié au module autonome et accessible depuis l'extérieur de la canalisation, ledit lien mécanique étant dénué de propriétés pour transmettre des données acquises par le module autonome vers l'extérieur de la canalisation et pour fournir de l'énergie au module autonome depuis l'extérieur de la canalisation. L'usage d'un module autonome, c'est-à-dire d'un module ne nécessitant pas d'aide extérieure pour acquérir et mémoriser les données, ni pour être alimenté en énergie, permet de se passer d'un câble volumineux tel que celui de la solution Sahara décrite en introduction.

Un simple lien mécanique, n'ayant pas de propriétés lui permettant de transmettre les données acquises par le module autonome vers l'extérieur de la canalisation, ou de fournir de l'énergie au module autonome depuis l'extérieur de la canalisation, suffit. Un tel lien mécanique, du fait de sa faible section, peut avoir une longueur bien supérieure au câble de la solution Sahara, sans entraver la progression du module autonome à l'intérieur de la canalisation.

Il confère en outre les mêmes avantages que le câble de la solution Sahara, comme de permettre une localisation facilitée du module autonome à l'intérieur de la canalisation, grâce à un suivi de la longueur du lien mécanique introduite à la suite du module autonome à l'intérieur de la canalisation, ainsi qu'une récupération aisée du module autonome, par simple traction du lien mécanique depuis l'extérieur de la canalisation.

L'analyse postérieure des données mémorisées par le module autonome, après sa sortie de la canalisation, permet d'établir un diagnostic tout-à-fait fiable. Cette analyse peut concerner une grande portion de la canalisation, à partir d'une seule acquisition / mémorisation de données par le module autonome, du fait de la longueur du lien mécanique utilisé.

Selon d'autres modes de réalisation qui peuvent être combinés selon toutes les manières envisageables :

- les moyens d'acquisition de données comprennent des moyens d'acquisition de données acoustiques ;

- le module autonome comprend des moyens d'émission et/ou de réception de signaux ;

- le module autonome comprend des moyens pour générer, après avoir été introduit à l'intérieur de la canalisation, un signal, tel qu'un bruit, apte à être capté depuis l'extérieur de la canalisation par un moyen approprié ;

- les moyens de mémorisation des données acquises par lesdits moyens d'acquisition de données comprennent un support amovible miniature ;

- le module autonome comprend une batterie rechargeable ou tout autre type de système de génération de courant embarqué ;

- le module autonome comprend des moyens de mesure d'effort de traction entre le module autonome et le lien mécanique ;

- le module autonome comprend des moyens de détection de position par rapport à au moins une paroi intérieure de la canalisation ;

- le module autonome comprend des moyens de déplacement dans le sens de la hauteur et/ou de la largeur de la canalisation ;

- le module autonome comprend des moyens de générer une onde de choc en direction de la paroi de la canalisation et de mesurer sa réponse vibratoire ;

- le module autonome comprend une ou plusieurs tiges souples fléchies en appui sur la paroi interne de la canalisation ; une analyse de la déformation de ces tiges souples peut par exemple permettre d'obtenir des caractéristiques de rugosité, d'ouverture de joints, et/ou de profil de l'intérieur de la canalisation ;

- le module autonome comprend l'un au moins parmi : une centrale inertielle, des moyens de mesure de pression, des moyens de mesure de vitesse et un magnétomètre ;

- le module autonome comprend une horloge interne synchronisée avec une horloge externe située à l'extérieur de la canalisation et servant de référence temporelle ;

- le module autonome est agencé pour que, après avoir été introduit à l'intérieur de la canalisation, le flux de fluide lui offre une résistance variable en fonction de sa vitesse relative par rapport au fluide. Par exemple, le flux de fluide lui offre une résistance maximale lorsque sa vitesse est proche de zéro ;

- le module autonome est agencé pour présenter une surface transversale vis-à-vis du flux de fluide maximale lorsque sa vitesse est proche de zéro ;

- le module autonome est articulé par rapport au lien mécanique à l'aide d'un ressort de façon à présenter une surface transversale vis-à-vis du flux de fluide maximale lorsque sa vitesse est proche de zéro ;

- le module autonome comprend des éléments de surface en périphérie d'un corps du module autonome, les éléments de surface étant aptes à se placer sensiblement contre le corps du module autonome lorsque la vitesse du module autonome n'est pas proche de zéro et à se placer de façon déployée par rapport au corps du module autonome lorsque la vitesse du module autonome est proche de zéro ;

- le module autonome comprend des passages pour le fluide et un élément de distribution mobile agencé pour laisser ouverts certains au moins desdits passages lorsque la vitesse du module autonome n'est pas proche de zéro et pour fermer certains au moins desdits passages lorsque la vitesse du module autonome est proche de zéro ;

- le module autonome présente une forme sensiblement oblongue ;

- le module autonome peut se décomposer en sous-modules proches, éventuellement enchaînés par un lien pouvant véhiculer de l'énergie et des informations, pour faciliter sa prise de courbes ;

- le module autonome et/ou le lien mécanique a une densité du même ordre que celle du fluide ;

- le lien mécanique est agencé pour limiter les forces de frottement avec le fluide et/ou avec l'intérieur de la canalisation ;

- le lien mécanique est doté de moyens pour que, lorsqu'il est à l'intérieur de la canalisation, le flux de fluide lui offre une résistance variable en fonction de sa vitesse relative par rapport au fluide. Cette résistance peut par exemple être maximale lorsque sa vitesse est proche de zéro ;

- le lien mécanique comprend des éléments de surface aptes à se placer sensiblement contre le lien mécanique lorsque la vitesse du lien mécanique n'est pas proche de zéro et à se placer de façon déployée par rapport au lien mécanique lorsque la vitesse du lien mécanique est proche de zéro ;

- le lien mécanique a une longueur de l'ordre de la dizaine de kilomètres ;

- le système comprend en outre des moyens de poussage (galets, bandes, éventuellement crantés, ou autres) pour introduire le lien mécanique à l'intérieur de la canalisation, de manière à vaincre les efforts résultant du frottement du lien mécanique sur la canalisation ; des moyens de tirage correspondants peuvent être utilisés pour faire sortir le lien mécanique de la canalisation ;

- les moyens de poussage sont divisés en deux étages, un pour débiter le lien mécanique, l'autre pour l'introduire dans la canalisation, un sas intermédiaire pouvant être utilisé ; un asservissement entre les étages est également envisageable ;

- le système comprend en outre des moyens de désinfection du lien mécanique en amont de son introduction dans la canalisation ;

- le module autonome comprend des moyens d'analyse de réponse vibratoire de la canalisation, par exemple aux fins d'obtenir des caractéristiques de raideur de cette canalisation ;

- le système comprend des moyens pour mesurer la longueur du lien mécanique introduite à l'intérieur de la canalisation au fur et à mesure que le module autonome est poussé par le flux de fluide et/ou des moyens pour mesurer la longueur du lien mécanique extraite de la canalisation par traction ; et/ou

- le système comprend des moyens pour mesurer la tension du lien mécanique au niveau du système d'extraction. Cette information couplée avec la mesure de la tension réalisée du coté du module autonome permet a posteriori et par itération, de mesurer les frottements du lien mécanique sur la canalisation, et de connaître plus précisément les allongements du lien mécanique, ce qui permet d'améliorer la précision de localisation.

L'invention propose aussi un procédé pour obtenir des informations relativement à une canalisation et/ou relativement au fluide transportant un flux de fluide, à l'aide d'un système selon l'une quelconque des revendications précédentes. Le procédé comprend les étapes suivantes :

- introduire à l'intérieur de la canalisation, un module autonome en termes d'enregistrement de données et d'alimentation en énergie, comprenant des moyens d'acquisition de données dont une analyse postérieure permet l'obtention d'informations relativement à la canalisation et/ou au fluide et des moyens de mémorisation des données acquises par lesdits moyens d'acquisition de données, un lien mécanique accessible depuis l'extérieur de la canalisation étant relié au module autonome, ledit lien mécanique étant dénué de propriétés pour transmettre des données acquises par le module autonome vers l'extérieur de la canalisation et pour fournir de l'énergie au module autonome depuis l'extérieur de la canalisation ; et

- acquérir des données à l'aide desdits moyens d'acquisition de données et mémoriser lesdites données à l'aide desdits moyens de mémorisation, pendant que le module autonome est poussé par le flux de fluide.

Avantageusement, on fait finalement sortir le module autonome de la canalisation en tirant sur le lien mécanique.

Une autre acquisition / mémorisation de données peut éventuellement être effectuée par le module autonome lorsqu'on le fait sortir de la canalisation. Elle peut compléter l'acquisition / mémorisation de données réalisée pendant que le module autonome est poussé par le flux de fluide, ce qui permet d'avoir des données redondantes, susceptibles d'améliorer la fiabilité des informations obtenues. En variante, elle peut remplacer l'acquisition / mémorisation de données réalisée pendant que le module autonome est poussé par le flux de fluide.

Les informations obtenues relativement à la canalisation peuvent concerner la détection d'une fuite dans ladite canalisation. En variante ou en complément, elles peuvent concerner des caractéristiques de ladite canalisation, telles qu'un diamètre, une ovalisation, un encrassement interne, un entartrage interne, une discontinuité d'une surface interne de la canalisation, une cohérence d'un terrain encaissant, une ouverture de joints, un profil en plan et/ou en élévation, une présence d'élément magnétique, une pression interne, et/ou une vitesse d'écoulement de fluide. Elles peuvent également comprendre des informations permettant la reconnaissance de l'état structurel de la canalisation.

Les informations obtenues relativement au fluide, en complément ou en remplacement des informations obtenues relativement à la canalisation, peuvent concerner la mesure de paramètres hydrauliques et/ou de qualité du fluide transporté. Elles peuvent aussi comprendre l'un au moins parmi : une concentration en chlore, un pH, une température du fluide, etc.

Lorsque des informations sont obtenues relativement à la canalisation et au fluide, l'obtention de deux types d'informations peut être simultanée et combinée, ou bien indépendante.

D'autres particularités et avantages de la présente invention apparaîtront dans la description ci-après d'exemples de réalisation non limitatifs, en référence aux dessins annexés, dans lesquels :

- la figure 1 est un schéma montrant un exemple de système selon l'invention ;
- la figure 2 est un schéma montrant un exemple de module autonome, en faisant apparaître des éléments qu'il est susceptible d'incorporer ;
- la figure 3 est un graphique montrant deux courbes relatives à des comportements possibles pour un module autonome situé dans une canalisation ;
- les figures 4a-4e sont des schémas montrant un exemple avantageux de configuration pour un module autonome, à différentes vitesses ;
- les figures 5a-5e sont des schémas montrant un autre exemple avantageux de configuration pour un module autonome, à différentes vitesses ;
- les figures 6a-6c sont des schémas montrant encore un autre exemple avantageux de configuration pour un module autonome, à différentes vitesses ;
- les figures 7a-7c sont des schémas montrant un exemple avantageux de configuration pour un lien mécanique, à différentes vitesses ;
- la figure 8 est un schéma montrant un autre exemple de système selon l'invention ;
- les figures 9a-9b sont des schémas montrant un exemple avantageux de module autonome muni d'écailles en positions fermée et ouverte respectivement ;
- la figure 10 est un schéma montrant le détail d'un étage du module autonome selon la figure 8 ;
- les figures 11a-11b sont des schémas montrant, en vue de côté et en vue transversale respectivement, un module autonome muni de capteurs pour réaliser des mesures de position ;
- la figure 12 est un schéma montrant, en vue de dessus, un module autonome muni de gouvernes pour pouvoir se déplacer latéralement ;
- la figure 13 est un schéma montrant, en vue de dessus, un module autonome muni de ballast pour pouvoir se déplacer en hauteur ;
- les figures 14a-14c sont des schémas montrant, à des instants successifs, des phénomènes pouvant se produire lors de l'introduction par poussage d'un lien mécanique dans une canalisation ;
- les figures 15a-15c sont des schémas montrant des exemples de systèmes de poussage et/ou tirage d'un lien mécanique dans une canalisation ;
- la figure 16 est un schéma montrant un exemple de système mettant en oeuvre une désinfection d'un lien mécanique avant son insertion dans une canalisation ;
- la figure 17 est un schéma montrant un exemple de système à deux étages pour l'introduction d'un lien mécanique dans une canalisation ;
- la figure 18 est un schéma montrant un exemple de système comprenant un asservissement entre deux étages distincts ;
- les figures 19 et 20 sont respectivement une vue de côté et une vue de face d'un agencement où le module autonome est muni de tiges souples ;
- la figure 21 est un schéma illustrant une variation de flexion des tiges souples embarquées sur un module autonome au passage d'un jointement de la canalisation ;
- la figure 22 est un schéma illustrant une variation de flexion des tiges souples embarquées sur un module autonome au passage d'un déboîtement de la canalisation.

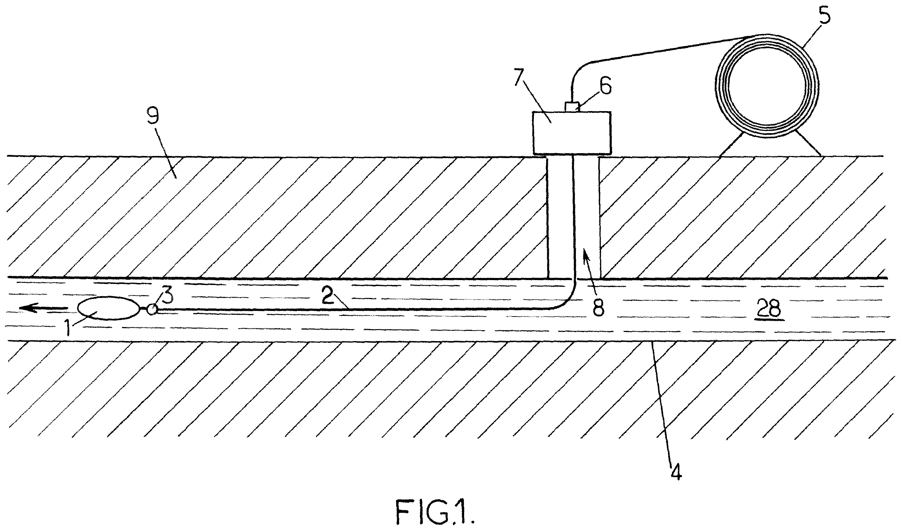

La figure 1 montre un exemple de système pour obtenir des informations relativement à une canalisation 4 transportant un flux de fluide 28.

La canalisation 4 peut être de tout type. Elle peut par exemple contenir, en guise de fluide, de l'eau ou tout autre liquide, un gaz, etc. Sa forme et ses dimensions peuvent être diverses. En particulier, son diamètre peut varier en fonction de l'application à laquelle elle participe. Le système pourra avantageusement être adapté en fonction des caractéristiques de la canalisation 4.

Un tronçon linéaire simple de la canalisation 4 a été représenté sur la figure 1. Mais ceci n'exclut pas la possibilité pour la canalisation 4 de présenter des angles, des coudes, ou encore des dérivations sur son parcours.

De même, la canalisation 4 représentée est enterrée sous le sol 9. Mais il est bien sûr envisageable qu'une partie de la canalisation soit à l'air libre. Elle peut aussi être entourée d'autre chose que de la terre. Elle peut par exemple se situer à l'intérieur d'une structure en béton ou autre.

Le système illustré sur la figure 1 comprend un module autonome 1 auquel est relié un lien mécanique 2.

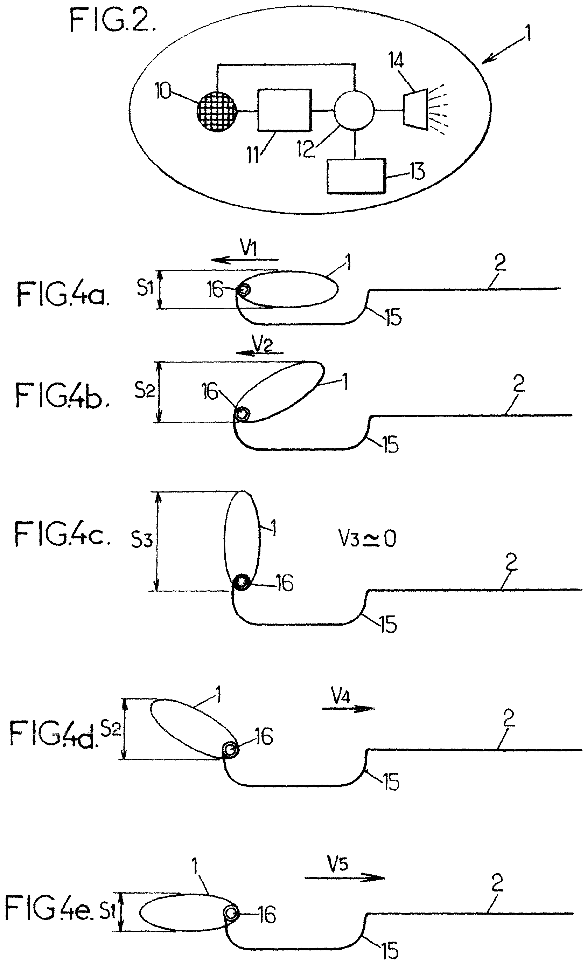

La figure 2 montre un exemple de module autonome 1, en faisant apparaître différents éléments qu'il est susceptible d'incorporer.

Dans cet exemple, le module autonome 1 comprend des moyens d'acquisition de données acoustiques, qui peuvent par exemple prendre la forme d'un micro 10. Dans ce cas, le micro 10 est avantageusement calé sur la ou les fréquences représentatives d'une fuite de fluide 28 dans la canalisation 4, afin de simplifier l'analyse des données acoustiques acquises.

Plus généralement, le module autonome 1 comprend des moyens d'acquisition de données dont une analyse postérieure permet l'obtention d'informations relativement à la canalisation 4. Par exemple, en complément ou en remplacement de moyens d'acquisition de données acoustiques, le module autonome 1 pourrait incorporer des moyens d'acquisition de données visuelles, tels qu'un appareil photo ou une caméra miniature.

Les moyens d'acquisition de données peuvent par exemple être agencés pour permettre une détection de fuite dans la canalisation 4. En variante ou en complément, ils peuvent être agencés pour obtenir des caractéristiques de la canalisation 4, telles qu'un diamètre, une ovalisation, un encrassement interne, un entartrage interne, une discontinuité de la surface interne de la canalisation, la cohérence du terrain encaissant, un profil en plan et/ou en élévation, une présence d'élément magnétique, une pression interne, une vitesse d'écoulement de fluide, etc.

Le module autonome 1 comprend en outre des moyens de mémorisation des données acquises par les moyens d'acquisition de données. Ces moyens de mémorisation peuvent prendre la forme d'une mémoire 11, qui peut être de toute nature envisageable. Cette mémoire peut par exemple comprendre un support amovible miniature, tel qu'une carte micro/mini-SD ("Secure Digital") ou autre.

L'autonomie du module autonome 1 résulte donc de la capacité de ce module à enregistrer et à stocker des données dont une analyse postérieure peut permettre l'obtention d'informations sur la canalisation 4. Elle résulte aussi de la capacité du module autonome 1 à fonctionner, sans avoir besoin d'être alimenté en énergie depuis l'extérieur.

A cet effet, une alimentation 12 peut être incorporée dans le module autonome 1, pour lui fournir l'énergie dont il a besoin pour fonctionner pendant une période de temps choisie.

Cette alimentation peut par exemple comprendre une batterie rechargeable. Dans ce cas, la batterie est avantageusement rechargeable depuis l'extérieur du module autonome 1, afin d'éviter d'avoir à ouvrir ce module pour effectuer l'opération de rechargement. En variante, il est possible de changer la batterie du module autonome 1, si cela s'avère nécessaire.

Il est également possible d'inclure dans le module un dispositif de rechargement de la batterie basé sur un micro générateur hydraulien profitant de la différence de vitesse relative entre le flux et le module autonome.

Avantageusement, le module autonome peut inclure un contrôle de charge de la batterie et peut demander, par émission de son spécifique, un arrêt de poussage, de sorte qu'étant arrêté, l'énergie de rechargement dépendant de ce différentiel de vitesse soit augmenté et réduise le temps de charge.

Dans tous les cas, l'alimentation 12 permet avantageusement de fournir en énergie l'ensemble des éléments qui le nécessitent au sein du module autonome 1.

En option, le module autonome 1 peut aussi comprendre des moyens de génération d'un signal, tel qu'un bruit, apte à être capté depuis l'extérieur de la canalisation 4 par un moyen approprié, lorsque le module se situe à l'intérieur de la canalisation 4. Ces moyens peuvent par exemple prendre la forme d'un émetteur d'un son caractéristique, tel qu'un bipper 14.

Toujours en option, le module autonome 1 peut incorporer une horloge interne 13. Cette horloge est avantageusement synchronisée avec une horloge externe, comme cela sera détaillé plus bas.

Pour obtenir des informations sur la canalisation 4 de la figure 1, par exemple afin de détecter une fuite ou d'obtenir d'autres caractéristiques de la canalisation, on introduit le module autonome 1 à l'intérieur de cette canalisation, par l'intermédiaire d'un point d'accès 8.

Avant cette introduction, le lien mécanique 2 est relié au module autonome 1. Cette connexion entre le lien mécanique 2 et le module autonome 1 peut être directe ou bien se faire par l'intermédiaire d'un ou plusieurs éléments.

Dans l'exemple illustré sur la figure 1, un émerillon 3 est disposé entre le lien mécanique 2 et le module autonome 1, de manière à permettre une libre rotation du module autonome 1, même lorsque le lien mécanique 2 reste fixe.

Le module autonome 1 est en outre agencé pour être poussé par le flux de fluide 28 transporté par la canalisation 4. La forme, les dimensions, ou encore tout autre paramètre caractéristique pertinent du module autonome 1 peuvent être choisis à cet effet. On peut ainsi éventuellement éviter l'usage de dispositifs pour améliorer le déplacement du module autonome 1 dans le fluide 28, de type parachute ouvert en tête du module ou autre.

A titre d'exemple, une forme sensiblement oblongue du module autonome 1, comme représentée sur la figure 1, ou toute autre forme présentant des propriétés hydrodynamiques permettant une circulation aisée du module autonome 1 dans la canalisation 4 peuvent être adoptées.

Il est également possible de fractionner le module en plusieurs sous-modules de façon à constituer un train de modules. Cette configuration permet de limiter la longueur totale du module équivalent et facilite le contournement d'obstacles et le passage de coudes. Si nécessaire, une liaison communicante et d'énergie peut être prévue entre les différents sous-modules. Cette liaison communicante peut par exemple comprendre un ou plusieurs fils de cuivre, de la fibre optique ou autre. Dans cet agencement, un des éléments du train de modules peut être dédié à l'alimentation des autres sous-modules par exemple, ce qui permet d'adapter l'autonomie de l'ensemble.

Les dimensions du module autonome 1 sont avantageusement choisies pour ne pas atteindre ou dépasser la plus petite section transversale de la canalisation 4, afin d'éviter que le module autonome 1 y reste bloqué.

On peut encore envisager de concevoir le module autonome 1 de manière à ce que sa densité soit du même ordre que celle du fluide 28, dans le but d'assurer une flottaison du module autonome 1 environ à mi-hauteur de la canalisation 4. D'autres mesures peuvent également être prises pour assurer une flottaison adéquate du module autonome 1.

Selon une configuration avantageuse, le module autonome 1 comprend une coque imperméable au fluide 28, par exemple métallique, qui protège les différents éléments incorporés dans ce module, ainsi qu'une couche supérieure entourant la coque imperméable, et constituée par exemple d'un matériau assurant les propriétés de flottaison recherchées, tel qu'une mousse à cellules fermées ou autre.

Bien sûr, d'autres constitutions du module autonome 1 sont également envisageables.

De la même façon que pour le module autonome 1, la densité du lien mécanique 2 peut être choisie proche de celle du fluide, de façon à ce qu'il se positionne naturellement « entre deux eaux » et ne vienne pas reposer au fond de la canalisation 4. Le lien est purement mécanique et cette possibilité (de densité faible) peut être permise par le fait que son diamètre n'est déterminé que par la résistance mécanique à la traction nécessaire à son retour. Une densité faible peut également être obtenue par juxtaposition, par exemple par coextrusion, d'un matériau de très faible densité et de résistance mécanique faible avec un matériau de haute résistance mécanique et de densité plus importante. Cependant, cette caractéristique n'est pas nécessaire à l'avance du lien mécanique 2 dans la canalisation 4 ; elle pourrait simplement la faciliter.

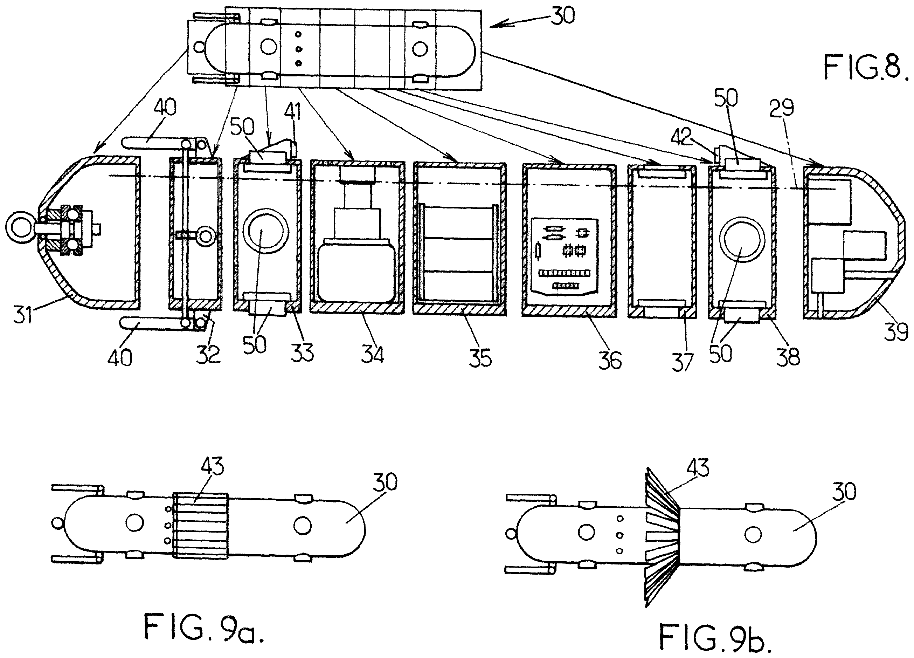

La figure 8 montre une variante de module autonome consistant en un assemblage d'éléments assurant chacun des fonctions respectives. Cet assemblage peut être une juxtaposition d'étages ou tronçons spécialisés par exemple.

Lorsque, comme cela a été évoqué plus haut, le module autonome se décompose en sous-modules reliés, mais non accolés, les uns aux autres, les sous-modules en question peuvent comprendre chacun un ou plusieurs desdits étages ou tronçons spécialisés.

Dans l'exemple illustré sur la figure 8, les différents étages comprennent un étage 31 d'accroche et de mesure d'effort, un étage 32 de gouverne, deux étages 33 et 38 de situation, un étage de ballastage 34, un étage de batterie et d'équilibrage 35, un étage 36 de mémorisation, de calcul et d'horloge, un étage 37 d'acquisition, d'émission et/ou de réception de signaux par exemple sonores (acoustiques) ou autres et un étage 39 de mesure de pression, de mesure de vitesse, de centrale inertielle et/ou de magnétomètre.

En complément ou en variante, le module autonome peut inclure un étage de génération d'une onde de choc en direction de la paroi de la canalisation et de récupération de l'onde de vibration en retour et/ou un étage comprenant une ou plusieurs tiges souples fléchies en appui sur la paroi interne de la canalisation pour en suivre et analyser la surface.

Un bus 29, par exemple filaire, permet avantageusement la communication et l'alimentation en puissance des différents étages. Dans le cas où le module autonome consiste en un train de modules, comme évoqué plus haut, ce bus peut devenir une liaison externe.

Les étages peuvent être fixés deux à deux, par exemple par vissage.

L'étanchéité entre ces étages peut être assurée par exemple à l'aide de joints toriques. Dans le cas de l'étage de ballastage 34, des trous de purge/remplissage y sont ménagés et l'étanchéité générale peut être faite par exemple par une seconde enveloppe.

Les fonctions des différents étages du module autonome 30, dans la mesure où elles diffèrent de celles des éléments du module autonome 1 seront détaillées plus loin.

Après introduction du module autonome 1 (ou 30) dans la canalisation 4, ce module est poussé par le flux de fluide 28, du fait de ses propriétés et de la vitesse de déplacement du fluide 28 à l'intérieur de la canalisation 4.

Au cours de sa progression à l'intérieur de la canalisation 4, le module autonome 1 (ou 30) entraîne le lien mécanique 2 auquel il est relié.

On note que ce lien mécanique 2 peut aussi être naturellement entraîné directement par le flux de fluide 28, dans le sens de ce flux. Ceci résulte du frottement entre le lien mécanique 2 et le fluide 28. Un tronçon de fluide entraîne avec lui un tronçon de lien mécanique.

Par effet de la friction du fluide 28, le lien mécanique 2 pourrait même dépasser le module autonome 1 (ou 30) par moments, notamment lorsque la vitesse du module autonome 1 devient inférieure à la vitesse du flux de fluide 28 qui serait aussi celle du lien mécanique 2. Ce dernier peut alors former une boucle.

Le lien mécanique 2 peut initialement être enroulé sur une bobine 5. Dans ce cas, le lien mécanique 2 est débité depuis la bobine 5, au fur et à mesure de la progression du module autonome 1 (ou 30) à l'intérieur de la canalisation 4.

Ainsi, le module autonome 1 (ou 30) peut parcourir une longueur égale ou proche de celle du lien mécanique 2, à l'intérieur de la canalisation 4. En effet, lorsque l'intégralité du lien mécanique 2 a été débitée depuis la bobine 5 à laquelle une extrémité du lien mécanique 2 est fixée, le lien mécanique 2 retient le module autonome 1 (ou 30) et l'empêche de poursuivre sa progression dans la canalisation 4.

Pour l'introduction du module autonome 1 (ou 30) à l'intérieur de la canalisation 4 sous pression, un dispositif d'insertion 7 peut avantageusement être utilisé. Ce dispositif peut par exemple reposer sur le principe des pousseurs, par exemple des galets et/ou des chenilles, tels qu'on peut les trouver pour l'enfilage de câbles de précontrainte ou de treuils de hauban.

Un dispositif d'insertion du même type (qui est éventuellement le même dispositif) ou de type différent peut être utilisé pour pousser le lien mécanique 2 à l'intérieur de la canalisation 4 sous pression, au fur et à mesure de la progression du module autonome 1 (ou 30) à l'intérieur de cette canalisation.

En l'absence de tout frottement entre le lien mécanique 2 et la canalisation 4 d'une part, et à l'introduction du lien mécanique 2 dans la canalisation 4 d'autre part, il ne serait pas utile d'exercer une force externe sur le lien mécanique 2 pour qu'il circule dans le flux de fluide 28 dans le sens de ce flux. Il faudrait peut être même ce lien pour qu'il ne dépasse pas le module autonome 1 et reste tendu en tous points.

Cependant ces conditions ne sont en général pas remplies, d'une part parce que la canalisation 4 n'est pas nécessairement longiligne sur toute l'excursion du module autonome 1 et que le lien mécanique 2 frottera au moins dans les coudes de la canalisation 4, et d'autre part parce que l'introduction du lien mécanique 2 dans la canalisation 4 sous pression implique une étanchéisation à cet endroit et un frottement résistant. Le poussage du lien mécanique 2 à l'intérieur de la canalisation 4 sous pression peut alors permettre de surmonter ces frottements.

Il reste cependant que dans les zones ou le lien mécanique 2 n'est pas retenu par les frottements, il continue à pouvoir être entraîné par le frottement du flux de fluide 28 dans le sens du flux. En aval du frottement du lien mécanique 2 sur la canalisation 4 ou à l'introduction, le frottement du fluide 28 sur le lien mécanique 2 correspond à une traction ; en amont, à une forme de poussage. De part et d'autre d'un frottement sur la canalisation 4, des forces conjointes s'exercent donc pour s'y opposer.

Le dispositif d'insertion utilisé pour l'introduction du lien mécanique 2 dans la canalisation 4 permet avantageusement de vaincre le frottement d'étanchéisation réalisé typiquement par un ou plusieurs joints toriques, un ou plusieurs joints à lèvre ou un système de presse étoupe. Il peut également permettre de pousser le lien mécanique 2 dans la canalisation 4 de façon à accompagner son entraînement par le flux de fluide 28 dans le sens du flux. En fonctionnement réversible, le dispositif d'insertion devient le dispositif d'extraction et il permet alors avantageusement de vaincre les efforts résultant des frottements du lien mécanique 2 dans le flux de fluide 28 et sur la canalisation 4 et ceux résultant des frottements de l'étanchéisation.

Dans le cas de l'excursion aller du module autonome 1 dans la canalisation 4, le poussage permanent du lien mécanique 2 dans la canalisation 4 peut permettre de vaincre les efforts résultant du frottement du lien mécanique 2 sur la canalisation 4 de plusieurs façons.

Comme indiqué plus haut, le flux de fluide 28 entraîne avec lui le lien mécanique 2, et le fait de l'introduire continûment ne s'oppose pas à ce fait.

En cas de frottement du lien mécanique 2 sur la canalisation 4, l'introduction du lien mécanique 2 génère une force de compression qui se transmet le long du lien mécanique 2 et qui, s'ajoutant éventuellement aux forces amont et aval résultant du frottement du fluide 28 sur le lien mécanique 2, peut être de nature à permettre de vaincre celle résultant du frottement du lien mécanique 2 sur la canalisation 4.

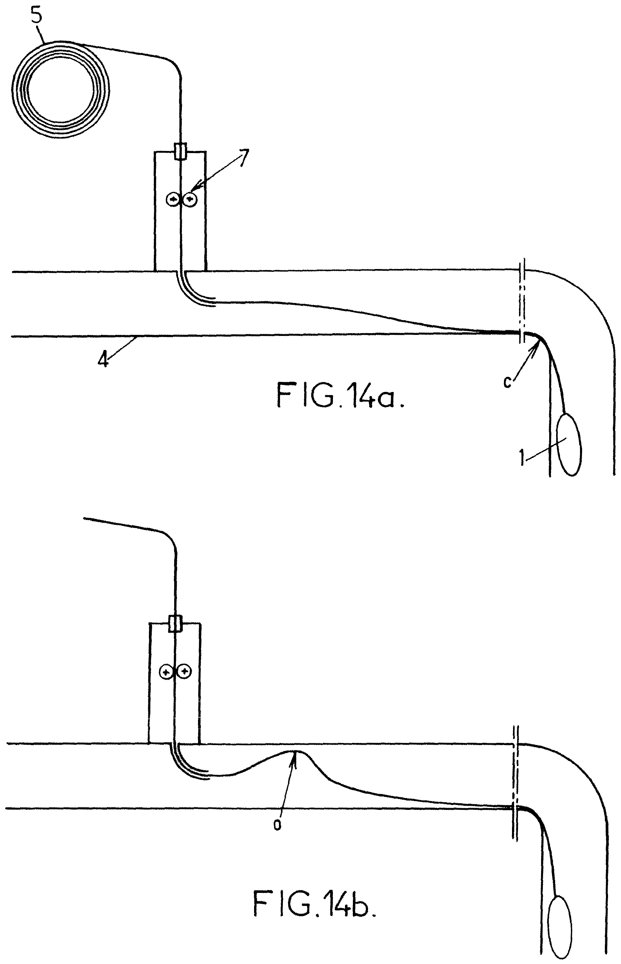

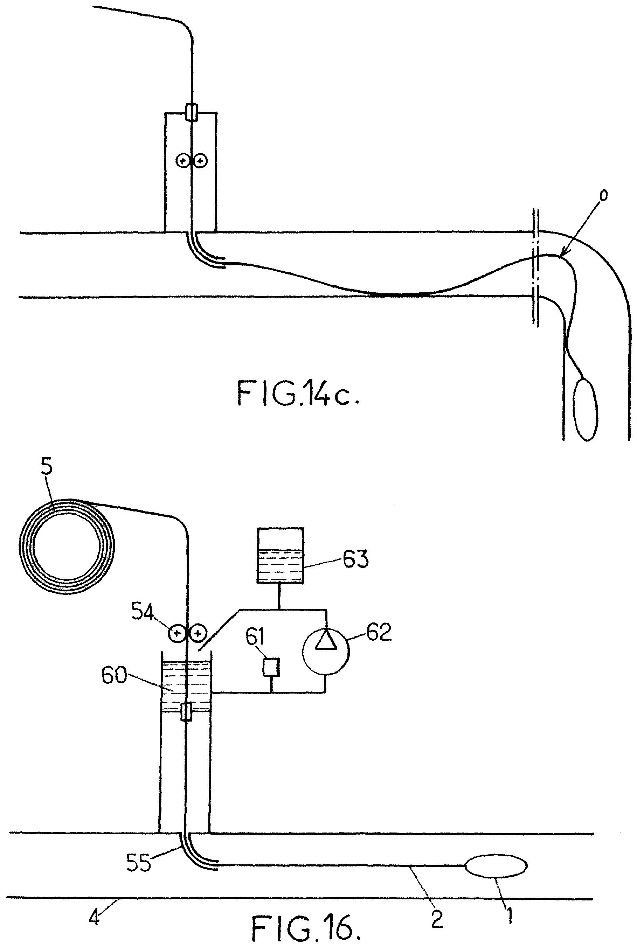

Cependant, comme illustré sur les figures 14a à 14c, compte tenu du rapport longueur entre frottement/diamètre du lien mécanique 2, il est probable que le poussage générant cette force de compression puisse provoquer, si le frottement du lien mécanique 2 sur la canalisation 4 est important, une forme d'instabilité élastique, un flambement, entre le point de poussage 7 et ce coincement c. Ce phénomène pourra cependant être de nature à débloquer le lien mécanique 2 au droit du coincement c par un effet de coup de fouet résultant de la propagation dans le sens du flux de fluide 28 de l'onde d'instabilité o du lien mécanique 2 d'une part et aussi par le fait que lors de l'instabilité, le lien mécanique 2 présentera vis-à-vis du fluide 28 une surface plus importante que s'il reste parallèle au flux et donc occasionnera une force de poussée plus importante. Une fois passé ce point de frottement, l'onde du lien mécanique 2 pourra se propager le long de celui-ci et pourra de la même façon débloquer un frottement suivant.

Ceci ne se produirait pas si le lien était simplement tiré par le module. On comprend donc l'avantage qu'il y a à pousser continûment le lien mécanique 2 dans la canalisation 4.

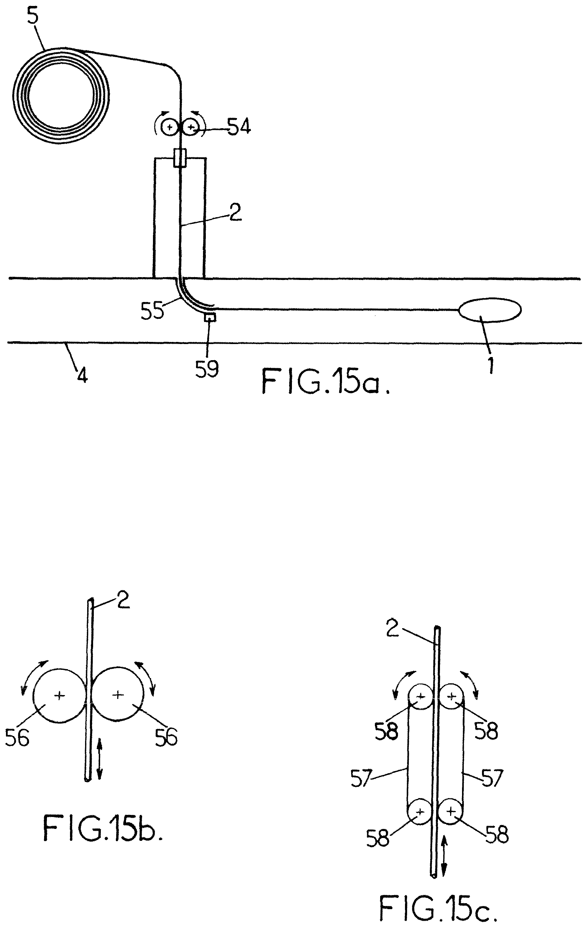

Comme illustré sur la figure 15a, le poussage, puis, au retour, le tirage peut être réalisé par exemple par un système 54 mu par un moteur électrique ou hydraulique. Ce système peut être par exemple à galets 56 (figure 15b) ou à bandes 57 se déplaçant autour de poulies 58. A l'entrée dans la canalisation 4, le lien mécanique 2 peut avantageusement être guidé par un moyen de guidage 55 approprié.

Avantageusement, un dispositif 59 de mesure de vitesse d'écoulement du fluide 28 peut être disposé par exemple au point où le lien mécanique 2 est emporté par le flux de fluide 28. De cette façon, le système 54 peut éventuellement adapter la vitesse d'introduction du lien mécanique 2 dans la canalisation 4 en fonction d'une telle mesure de vitesse d'écoulement du fluide 28, par exemple en la réglant sensiblement à la même valeur que cette mesure.

Un moyen de mesure de l'effort d'introduction/extraction du lien mécanique 2 dans la canalisation 4 peut également être utilisé. Cet effort est représentatif du frottement du à l'étanchéisation de l'introduction du lien mécanique 2 à l'aller comme au retour, de l'effort de poussage/tirage du lien mécanique 2 dans la canalisation 4, mais aussi de l'effort nécessaire à dérouler la réserve de lien à l'extérieur de la canalisation 4 et des pertes internes du système.

La mesure de l'effort peut résulter d'un simple calcul de consommation électrique, par exemple si le système 54 est mu par un ou plusieurs moteurs électriques ou bien de la mesure de la pression et du débit dans le cas d'un ou plusieurs moteurs hydrauliques, la vitesse d'introduction du lien mécanique 2 dans la canalisation étant mesurée par ailleurs.

Par ailleurs, comme illustré à la figure 16, dans le cas où la canalisation 4 est par exemple une conduite d'eau potable, le dispositif d'insertion du lien mécanique 2 peut inclure une zone 60 de désinfection en continu du lien du lien mécanique 2 avant son introduction dans la canalisation 4. Le dosage du désinfectant contenu dans la zone 60 peut être maîtrisé à l'aide d'un circuit approprié contenant par exemple une réserve 63 de désinfectant, une pompe 62 et un dispositif 61 de contrôle du dosage dans la zone 60.

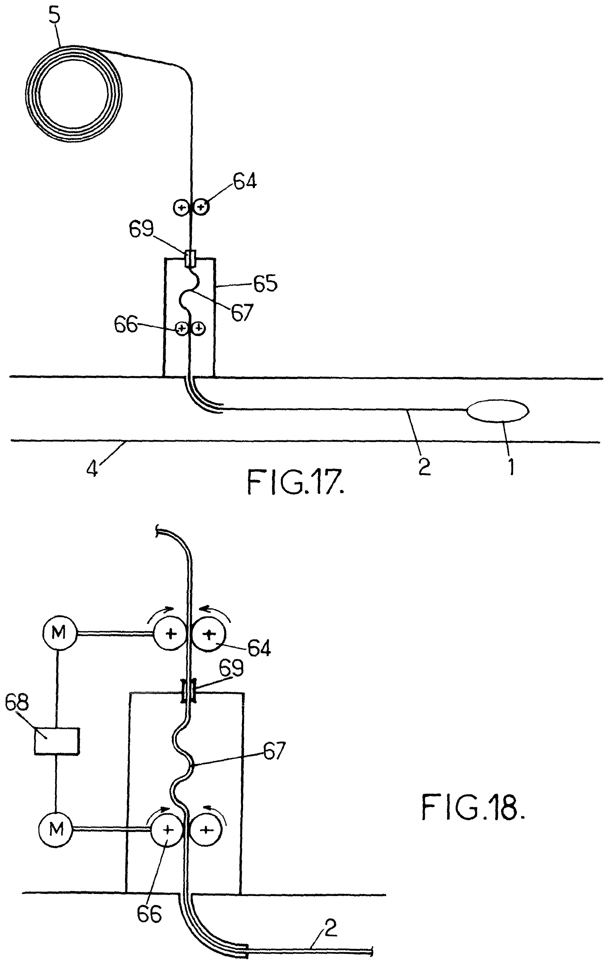

Selon un autre raffinement optionnel illustré à la figure 17, on dissocie le poussage du lien mécanique 2 dans la canalisation 4 et l'introduction du lien mécanique 2 dans la zone de poussage 65 qu'on appelle ci-après le sas. Le poussage du lien mécanique 2 dans la canalisation 4 se fait alors par des moyens de poussage 66 situés dans le sas 65. En revanche, les moyens d'introduction 64 du lien mécanique 2 dans le sas 65 sont situés en amont du sas, un moyen d'étanchéité 69 étant avantageusement disposé à l'entrée du sas 65.

On distingue ainsi l'effort nécessaire à l'introduction ou à l'extraction du lien mécanique 2 relativement à la canalisation 4, de l'effort nécessaire à l'introduction ou l'extraction du lien mécanique 2 relativement au sas 65. Dans ce cas, la mesure de l'effort d'introduction/extraction du lien mécanique 2 relativement à la canalisation 4 peut donner des informations complémentaires exploitables pour la connaissance des caractéristiques de configuration de la canalisation 4.

On pourra d'ailleurs laisser un mou 67 de lien mécanique 2 entre les deux systèmes 64 et 66 d'introduction d'une part et d'extraction d'autre part, afin d'éviter un effort de tirage sur le système de poussage.

La synchronisation des vitesses d'avancement du lien mécanique 2 sur chacun des deux systèmes est avantageusement réalisée par un asservissement 68 du système 64 d'introduction du lien mécanique 2 par le système 66 de poussage dans la canalisation 4, de sorte que la longueur de lien mécanique 2 introduite corresponde à celle de lien mécanique 2 poussé. Un tel asservissement est illustré à la figure 18. Le système 64 d'introduction peut également être dimensionné pour permettre de dérouler la réserve de lien mécanique 2 si celle-ci est sur un touret par exemple.

Dans ce cas, une mesure de l'effort de poussage du lien mécanique 2 dans la canalisation 4 peut renseigner sur d'éventuels coincements et instabilité élastique comme décrit précédemment : dans le premier cas une augmentation de l'effort de poussage discontinue, dans le second cas une brutale diminution.

Dans ce cas, une mesure de l'effort de tirage hors de la canalisation 4 peut permettre, par comparaison avec l'effort mesuré au même moment sur l'émerillon 3 du module autonome 1, un calcul des frottements et déviations du lien mécanique 2 dans la canalisation 4. Cette comparaison est permise par la synchronisation des horloges. L'effort de tirage résulte de la somme des efforts nécessaires à tirer le lien mécanique 2 dans le flux de fluide 28 dans le sens contraire du flux, ces efforts résultant du frottement du lien mécanique 2 dans le fluide 28, des efforts de frottement à vaincre entre la canalisation 4 et le lien mécanique 2 là ou il est en contact, des efforts provenant de son placage dans les coudes et de l'effort résistant du module autonome 1.

Une autre exploitation de la mesure des efforts concomitants de tirage et reçu sur le module autonome 1 permet de calculer, à la fin de l'extraction, l'allongement du lien mécanique 2 entre chacun des points de frottement constituant autant de tronçons de lien, et de corriger ainsi la longueur du lien mécanique 2 introduit ou extrait mesuré par le système de mesure relativement à l'allongement du lien mécanique 2 entre ces tronçons. Cette correction est de nature à améliorer significativement la localisation curviligne du module autonome 1 en fonction du temps. La longueur du lien mécanique 2 dans la phase retour en particulier peut être considérée comme la longueur déroulée à laquelle il convient d'ajouter la somme des allongements absolus résultant de l'application d'effort de traction sur le lien mécanique 2 dans les tronçons.

L'autonomie du module autonome 1 (ou 30), à la fois en termes d'enregistrement de données et d'alimentation, lui permet de réaliser à lui seul la plupart voire la totalité des opérations qui permettront une analyse postérieure des données acquises, conduisant à l'obtention d'informations sur la canalisation 4.

C'est notamment grâce à cette autonomie du module autonome 1 (ou 30) que le système selon l'invention peut se permettre de n'utiliser qu'un simple lien mécanique pour relier le module autonome 1 (ou 30) à l'extérieur de la canalisation 4.

Un tel lien mécanique doit s'entendre comme un lien n'ayant pas de propriétés lui permettant de transmettre des données acquises par le module autonome 1 (ou 30) vers l'extérieur de la canalisation 4, ou de fournir de l'énergie au module autonome 1 (ou 30) depuis l'extérieur de la canalisation 4. Cela constitue une différence importante avec la solution Sahara décrite en introduction.

Un tel lien mécanique peut avoir une section utile très inférieure au câble utilisé par Sahara. De ce fait, la longueur du lien mécanique 2 pouvant être utilisée sans entraver la progression du module autonome 1 (ou 30) à l'intérieur de la canalisation 4 peut être bien supérieure à celle du câble de Sahara.

A titre d'exemple, un lien mécanique d'une longueur de l'ordre de la dizaine de kilomètres, par exemple autour de 20 km, peut être utilisé.

Cela constitue un avantage considérable, puisque l'acquisition de données permettant l'obtention d'informations sur une telle distance peut être faite en une seule fois, alors qu'elle aurait nécessité dix acquisitions successives sur des sous-portions respectives de la canalisation, avec la solution de l'art antérieur.

Cela permet en outre de rendre l'obtention d'informations possible, même lorsque les points d'accès à la canalisation considérée sont très éloignés les uns des autres, typiquement de l'ordre de la dizaine de kilomètres.

A titre d'exemple, le lien mécanique 2 peut être un câble en acier, en fibres de verre et/ou en fibres de carbone.

Dans ce cas, un diamètre du câble de l'ordre du millimètre, par exemple entre 3 et 4 millimètres, pourrait suffire. La faible section utile du lien mécanique 2 permet à la bobine 5 sur laquelle ce lien mécanique est éventuellement enroulé initialement d'avoir un poids relativement réduit, ce qui en facilite le transport.

Bien sûr, d'autres matériaux peuvent également être envisagés et adaptés en fonction du type de canalisation et de fluide considérés.

Avantageusement, le lien mécanique 2 pourrait comprendre une gaine de protection autour d'un câble.

Le lien mécanique 2 pourrait aussi être un câble dont le pas de toronnage est inverse du pas de câblage, afin d'équilibrer les moments.

Un coefficient d'élongation minimum ou contrôlé du lien mécanique 2 pourrait aussi être utilisé.

De façon avantageuse, la nature du lien mécanique 2 sera choisie pour limiter les forces de frottement avec le fluide 28 et l'intérieur de la canalisation 4 lors d'éventuels contacts entre eux, notamment dans les zones de courbure de la canalisation.

A cet effet, le lien mécanique 2 peut être enrobé d'un matériau à faible coefficient de frottement vis-à-vis de la canalisation 4, de sorte que les efforts résultant de ce frottement soient facilement vaincus par la somme des efforts résultant des frottements du fluide 28 sur le lien mécanique 2. Le lien mécanique 2 lui-même peut être constitué d'un matériau homogène ayant ce faible coefficient de frottement tout en ayant la résistance mécanique de traction nécessaire à son retour. Cet enrobage aurait en outre l'avantage de rendre ronde et lisse la périphérie du lien mécanique 2, ce qui n'est pas le cas d'un câble constitué de fils toronnés par exemple, et donc de rendre ainsi plus simple l'étanchéisation de l'introduction.

L'obtention d'informations relativement à la canalisation 4 peut être effectuée de la manière suivante.

Après introduction du module autonome 1 (ou 30) dans la canalisation 4, ce module autonome 1, suivi du lien mécanique 2, est poussé par le flux de fluide 28. Au cours de sa progression à l'intérieur de la canalisation 4, le module autonome 1 (ou 30) effectue l'acquisition et la mémorisation des données pertinentes.

La position du module autonome 1 (ou 30) à l'intérieur de la canalisation 4 peut être connue en mesurant la longueur du lien mécanique 2 introduite à l'intérieur de la canalisation 4 au fur et à mesure que le module autonome 1 (ou 30) est poussé par le flux de fluide 28.

A cet effet, des moyens automatiques de mesure 6 peuvent être disposés par exemple à proximité du point d'accès 8. En variante, les moyens de mesure pourraient être placés à proximité de la bobine 5, pour évaluer la longueur du lien mécanique 2 débité à partir de cette bobine. Dans ce dernier cas, la longueur du lien mécanique 2 introduite à l'intérieur de la canalisation 4 peut être déduite de la longueur mesurée du lien mécanique 2 débité à partir de la bobine 5, la distance entre la bobine 5 et le point d'accès 8 étant connue. Les moyens de mesure pourraient encore faire partie d'un système de poussage et/ou tirage du lien mécanique 2 tel que décrit plus haut.

On peut ainsi connaître en permanence la longueur de lien mécanique 2 poussé dans la canalisation. Cette mesure peut être horodatée par une horloge parfaitement synchronisée sur une horloge embarquée dans le module autonome 1. Cette synchronisation permet ensuite de connaître la longueur de lien mécanique 2 introduit dans la canalisation 4 au moment d'un événement enregistré par le module autonome 1. Cette connaissance peut apporter une information de localisation curviligne de cet événement.

Lorsqu'on utilise un système de poussage tel que décrit plus haut en référence aux figures 15a-15c, la mesure de la longueur de lien mécanique 2 introduit dans la canalisation 4 peut par exemple être réalisée par mesure du nombre de tours des galets d'introduction 56, ou bien par le nombre de tours des poulies d'entraînement 58 des bandes 57 en tenant compte ensuite de la longueur des bandes.

Afin d'éviter toute dérive due à un coefficient d'entraînement du lien mécanique 2 entre les galets 56 ou les bandes 57, ceux-ci ou celles-ci pourront présenter des formes permettant de pincer suffisamment le lien mécanique 2 pour éviter un glissement. Ainsi la partie des galets ou des bandes en contact avec le lien mécanique 2 pourrait présenter des crans. De même, les bandes 57 pourraient être intérieurement crantées pour éviter tout glissement entre les poulies 58 et les bandes 57.

La position géographique du module autonome 1 (ou 30) peut aussi être déterminée, ou ajustée en complément de l'analyse de la longueur du lien mécanique 2 introduite à l'intérieur de la canalisation 4, par écoute d'un signal, tel un signal sonore par exemple, généré par l'élément 14 du module autonome 1 (ou les moyens d'émission de l'étage 37 du module autonome 30). La captation du signal est effectuée à l'aide de moyens appropriés dont dispose un opérateur situé en surface le long de la canalisation 4.

De façon avantageuse, une horloge externe située à l'extérieur de la canalisation 4 peut servir de référence temporelle pour suivre l'introduction du lien mécanique 2 à l'intérieur de la canalisation 4.

Cette horloge peut avantageusement être couplée aux moyens de mesure 6, de sorte qu'on puisse connaître la longueur du lien de mécanique 2 introduite à l'intérieur de la canalisation 4 à chaque instant au cours de la progression du module autonome 1 (ou 30) à l'intérieur de cette canalisation. Cela permet d'obtenir une indication de la position géographique du module autonome 1 (ou 30) à l'intérieur de la canalisation 4, en fonction du temps mesuré par l'horloge externe. Une roue codeuse peut être utilisée à cet effet.

L'horloge interne 13 du module autonome 1 (ou de l'étage 36 du module autonome 30), lorsqu'elle existe, est avantageusement synchronisée avec cette horloge externe. Cela permet de disposer d'une référence de temps unique.

De façon avantageuse, une mesure de l'effort d'accrochage entre le module autonome et le lien mécanique peut être réalisée et des conclusions peuvent être tirées de cette mesure.

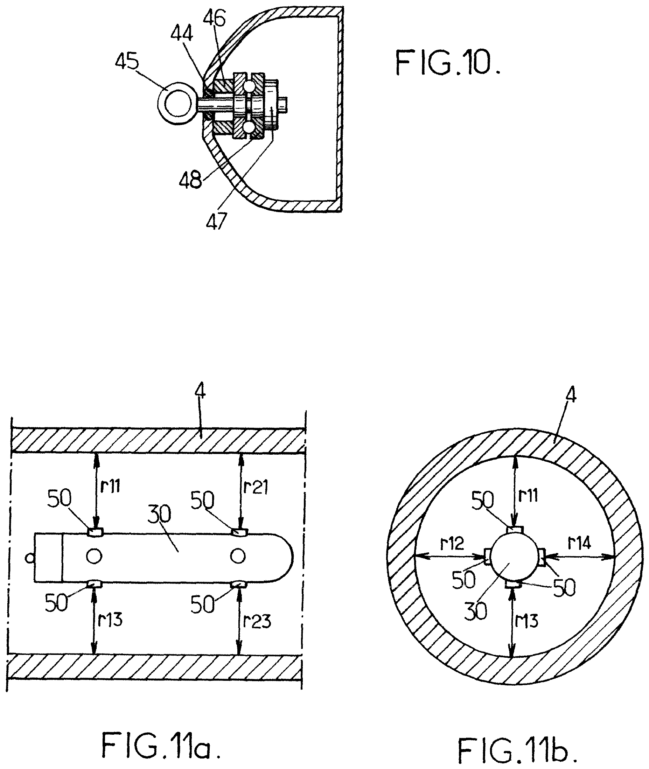

A cet effet, l'étage 31 du module autonome 30, qui a été agrandi sur la figure 10, peut comprendre un émerillon 45 pour relier le lien mécanique 2 au module autonome, un joint 44, ainsi qu'un capteur de mesure d'effort de traction 46, une butée à bille 48 et un dispositif d'arrêt 47.

Le capteur 46 (qui pourrait d'ailleurs être positionné différemment, par exemple à l'interface entre l'émerillon 45 et le lien mécanique 2) fournit une mesure indicative de la traction exercée entre le module autonome 30 et le lien mécanique 2.

Cette mesure peut être analysée, par exemple par comparaison à un seuil qui pourrait être prédéterminé ou indiqué comme une consigne susceptible de varier. Si l'effort de traction mesuré est faible, cela signifie que la vitesse du lien mécanique 2 et celle du module autonome 30 sont proches, soit parce que les deux avancent en même temps, soit parce que le module autonome 30 est bloqué.

Si l'effort de traction mesuré est important, cela signifie que le module autonome 30 avance beaucoup plus vite que le lien mécanique 2 ne se déroule dans le sens aller, ou bien que la vitesse de rembobinage du lien mécanique 2 est trop rapide dans le sens retour. Dans le premier cas, le lien mécanique 2 devrait être poussé plus vite dans la canalisation 4. Dans le second cas, le lien mécanique 2 devrait être tiré moins vite en dehors de la canalisation 4.

Si l'analyse de la mesure d'effort de traction est entièrement réalisée par le module autonome 30, ce dernier peut avantageusement émettre un signal capable de se propager dans le fluide 28 par exemple jusqu'au point d'accès 8, pour lui communiquer de l'information relative à cette mesure. Par exemple, si la mesure d'effort de traction dépasse un seuil, un signal peut être émis pour indiquer que cet effort devrait être diminué. L'émission du signal peut être effectuée par l'étage 37 dont le mode de fonctionnement sera détaillé plus loin.

Dans un de ses agencements, le module autonome peut contenir des sondes de mesure des caractéristiques du fluide transporté par la canalisation, par exemple dans le cas d'eau potable, d'un moyen de mesure de concentration en chlore, de pH, de température et/ou de tout autre paramètre intervenant dans la caractérisation de la qualité du fluide.

De façon avantageuse, la position du module autonome par rapport aux parois intérieures de la canalisation peut être mesurée.

A cet effet, le module autonome devrait de préférence avoir une position en hauteur constante dans la canalisation et avoir une gîte constante, c'est-à-dire que son centre de gravité serait situé sous son centre de poussée de sorte qu'il ne puisse pas ou très difficilement s'incliner autour d'un axe vertical. Ceci peut être facilement obtenu par une répartition appropriée des masses et des volumes.

La mesure de position du module autonome 30 peut être effectuée à l'aide de capteurs 50 embarqués sur ce module, par exemple autour des étages de situation 33 et 38. Chacun de ces capteurs mesure la distance r11, r12, r13 ou r14 qui le sépare d'une paroi intérieure de la canalisation 4, comme cela apparaît sur les figures 11a et 11b, respectivement en vue de côté et en vue transversale.

Ces capteurs 50 sont par exemple des sonars émettant et recevant une vibration ultrasonore réfléchie sur la paroi. La mesure du temps d'un trajet aller-retour de cette vibration donne une information sur la distance entre le sonar et la paroi en vis-à-vis. Même si la vitesse du son est affectée par la vitesse et la pression du fluide, on peut considérer que la mesure de chaque capteur est impactée de la même façon. Les mesures de temps relatives peuvent donc être utilisées pour connaître la position haut-bas et la position gauche-droite du module autonome 30 dans la canalisation 4.

L'agencement de deux fois quatre capteurs illustrés sur les figures 11a et 11b peut en outre donner une information sur l'inclinaison relative du module autonome 30 dans la canalisation 4.

Comme les autres mesures effectuées par le module autonome, ces mesures de position peuvent être mémorisées localement le cas échéant.

Moyennant une mesure de la vitesse du son dans le fluide 28 aux conditions locales (pression, température et vitesse du fluide), ces mesures de position peuvent aussi être exploitées pour caractériser la géométrie interne de la canalisation : diamètre, ovalisation, encrassement, entartrage, etc.

La vitesse susmentionnée du son dans le fluide 28 peut être obtenue en installant sur le module autonome 30 un capteur 42 pointant sur une particularité géométrique fixe 41 dont la distance au capteur 42 est connue et invariable, de sorte que la vitesse puisse directement être calculée à partir de la mesure du temps. Cette vitesse peut ensuite être utilisée pour le calcul des distances.

En variante, la vitesse du son dans le fluide 28 peut être obtenue en utilisant deux émetteurs-récepteurs ultrasonores, sur le modèle des anémomètres statiques ultra sonores, en lieu et place des éléments 41 et 42 mentionnés ci-dessus, et en comparant le temps dans un sens et dans l'autre. La différence résultant de cette comparaison est représentative de la vitesse du module autonome 30 relativement au fluide 28. En particulier, si le module autonome est à l'arrêt absolu, la différence de temps est directement représentative de la vitesse du fluide.

Les informations obtenues sur la géométrie interne de la canalisation sont avantageusement mémorisées et horodatées, par exemple dans l'étage 36 du module autonome 30. A posteriori, ces informations pourront ainsi être situées en abscisse curviligne le long de la canalisation 4. Cette possibilité de reconstitution de la géométrie interne de la canalisation peut être extrêmement utile au gestionnaire de cette canalisation.

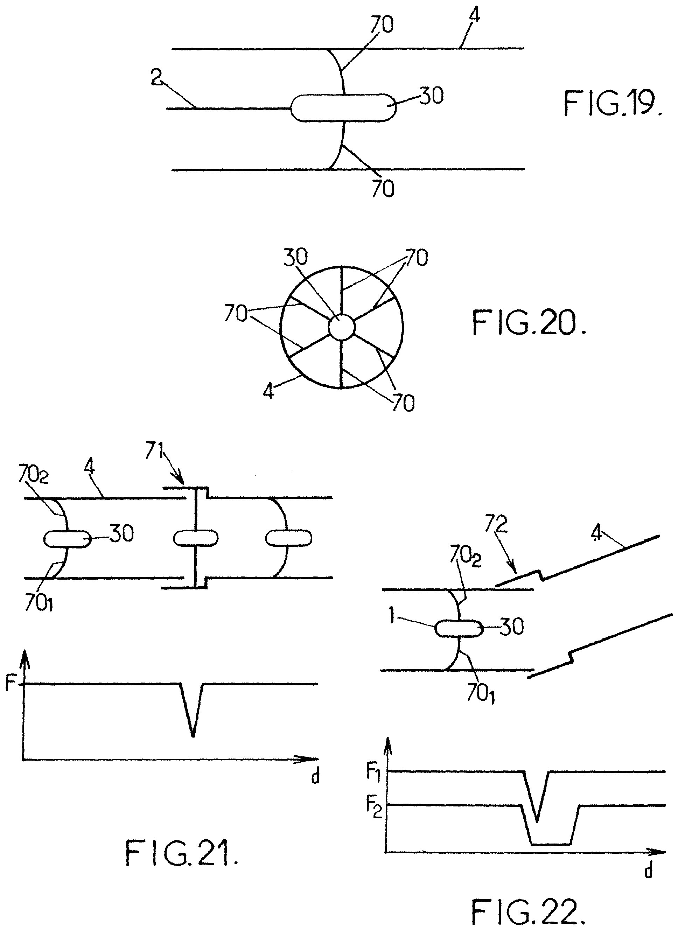

Dans un agencement avantageux, illustré sur les figures 19 et 20, le module autonome 30 (ou 1) intègre, sur sa périphérie, un élément porteur d'une ou plusieurs tiges souples 70 suffisamment longues pour toucher la paroi interne de la canalisation 4 en étant fléchies, mais suffisamment souples pour ne pas s'opposer significativement à l'avance du module autonome dans la canalisation, puis à son retour. Le contact avec la paroi de la canalisation impose la flexion des tiges 70 et par conséquent, la différence de distance entre le module autonome et la paroi de la canalisation modifie la flexion des tiges.

Lors de son avance dans la canalisation 4, ces tiges 70 sont en contact avec la paroi interne de la canalisation et la mesure de leur flexion respective et/ou relative, par exemple en réponse à un changement de section de la canalisation ou une variation due à une rugosité de la paroi interne de la canalisation, peut permettre de restituer le profil interne de la canalisation.

La figure 21 montre un exemple de variation de la flexion des tiges souples $70_1$ et $70_2$ du module autonome 30 (ou 1), au passage d'un jointement 71 de la canalisation 4. Comme indiqué sur la courbe de la figure 21, la flexion F des deux tiges diminue brusquement au niveau du joint, pour retrouver ensuite sa valeur initiale.

De la même façon, la figure 22 montre un exemple de variation de la flexion des tiges souples $70_1$ et $70_2$ du module autonome 30 (ou 1), au passage d'un déboîtement 72, avec changement d'angle, de la canalisation 4. Comme indiqué sur les courbes de la figure 22, les flexions F1 et F2 correspondant respectivement aux tiges souples $70_1$ et $70_2$ subissent chacune une diminution au passage du déboîtement 72 puis une augmentation au-delà de ce déboîtement, mais sur des durées éventuellement différentes.

Les tiges souples utilisées peuvent par exemple être constituées de fibre de verre. Une lumière peut éventuellement y être émise et l'intensité de retour peut être mesurée relativement à l'intensité émise. L'atténuation de l'intensité est en effet une fonction de la courbure de la fibre.

En variante ou en complément, les tiges souples peuvent par exemple être constituées d'une lame mince d'un matériau élastique tel que l'acier ou une matière plastique à faible déformation, de part et d'autre de laquelle sont collés, sérigraphiés, soudés ou associés par tout autre technique de liaison plane et intime, des éléments sensibles à la déformation, tels que par exemple des jauges de déformation ou des capteurs optiques basés sur la technologie des réseaux de Bragg.

Dans un tel agencement, la flexion d'une tige provoquera, de façon égale et opposée, une déformation de la tige (traction sur une face, compression sur la face opposée) strictement proportionnelle à la flexion.

Un déplacement du module autonome est également possible. Les étages 32 de gouverne et 34 de ballastage du module autonome 30 par exemple peuvent assurer ce rôle.

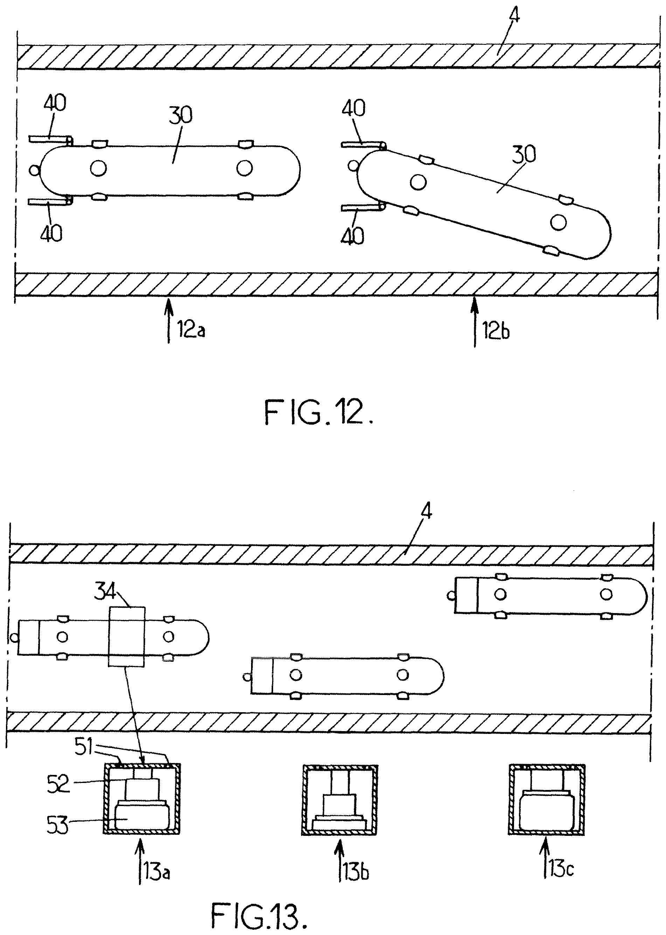

Une ou plusieurs gouvernes (ou nageoires) 40 peuvent ainsi permettre un déplacement gauche-droite du module autonome 30, comme dans le cas d'un navire. Ceci est illustré sur la figure 12, qui est une vue de dessus, où le module autonome 30 se déplace d'abord dans l'axe de la canalisation 4 (configuration 12a, le fluide se déplaçant de la gauche vers la droite sur cette figure), puis se déplace vers une paroi de la canalisation 4 suite à un pivotement des gouvernes 40 par rapport à l'axe longitudinal du module autonome 30 (configuration 12b).

Le ballastage peut être permis par exemple par la compression/décompression d'un volume d'air inclus dans une baudruche étanche ou un volume de mousse élastique à cellules fermées et comprimé par un dispositif à micro moteur, de type pot piston ou micro-vis. Le volume d'air comprimé étant remplacé par un volume d'eau équivalent, la densité du module autonome augmente et celui-ci descend dans la canalisation. La décompression de la baudruche à l'inverse permet la remontée du module autonome.

La figure 13 illustre ce mécanisme à trois instants successifs. A l'instant 13a, le module autonome 30 est situé sur l'axe de la canalisation 4. Son étage 34 de déballastage est tel que la baudruche d'air comprimé 53 contient une certaine quantité d'air.

A l'instant 13b, de l'eau a été introduite dans l'étage 34 de déballastage à travers les prises d'eau 51, alors que l'air contenu dans la baudruche 53 était comprimé par le piston 52. Ceci a provoqué une descente du module autonome 30 dans la canalisation 4.

A l'instant 13c, l'air contenu dans la baudruche 53 a été décomprimé et a évacué de l'eau qui remplissait l'étage 34 de déballastage. Ceci a entraîné une montée du module autonome 30 dans la canalisation 4.

Ces organes de déplacement du module autonome, ou d'autres, peuvent être utilisés par exemple pour effectuer un recentrage du module autonome 30 dans la canalisation 4. Ce recentrage peut notamment faire suite à la constatation d'un décentrage suite à des mesures de position effectuées par le module autonome comme exposé plus haut.

Le recentrage peut avantageusement être piloté par un système de gestion embarqué dans le module autonome, utilisant un logiciel intégrant la prise des mesures de position, leur exploitation, leur comparaison à un seuil et l'action sur les organes de déplacement.

Les organes de déplacement du module autonome peuvent aussi être utilisés pour prendre en compte certaines situations, telles qu'un blocage du module autonome. A titre illustratif, le module autonome peut se déplacer pour contourner un obstacle, par exemple en se rapprochant d'une paroi de la canalisation plutôt que de rester au centre. Là aussi, un logiciel peut permettre de gérer ce type de situation.

Eventuellement, un ordre de modification de position peut provenir de l'extérieur du module autonome, par exemple par émission d'un signal approprié depuis l'extérieur de la canalisation ou bien d'une source de signal placée dans la canalisation et à proximité d'un point d'accès. Dans ce cas, le module autonome doit être capable de recevoir et d'interpréter ce signal, comme cela sera exposé plus loin.

Le module autonome peut avantageusement être utilisé pour obtenir des informations sur la canalisation à l'intérieur de laquelle il se déplace. Lorsque cette canalisation fait partie d'un réseau de canalisations et que le module autonome se déplace dans ce réseau, de canalisation en canalisation, les informations obtenues peuvent concerner la configuration de tout ou partie du réseau.

A cet effet, le module autonome 30 peut comprendre, par exemple dans son étage 39, une centrale inertielle capable d'estimer sa trajectoire, en termes de montée et de descente, ainsi que ses changements de direction.

Ces mesures, avantageusement horodatées, peuvent être mémorisées par le module autonome 30, par exemple dans son étage 36. Ultérieurement, après mise en correspondance avec la position curviligne du module autonome 30, elles peuvent être exploitées pour établir le profil en plan et/ou en élévation de la ou des canalisations à l'intérieur desquelles le module autonome s'est déplacé.

Pour plus de précision, les mesures effectuées par la centrale inertielle peuvent être corrigées des effets des actions sur les gouvernes et ballast du module autonome 30.

Une caractérisation d'un état structurel peut résulter de l'analyse de réponse vibratoire de la structure considérée. Cette réponse est représentative de la raideur de cette structure et/ou de la qualité de sa liaison avec d'autres structures adjacentes et, par analyse complémentaire, peut permettre de détecter et de quantifier d'éventuels endommagements ou discontinuités.

Dans le cas d'une canalisation, des endommagements peuvent provenir d'une mauvaise cohérence du terrain encaissant, autour de la canalisation, si bien que celle-ci, au lieu d'être uniformément portée et d'une certaine façon contrainte, présente des zones ou sa seule section participe à sa résistance. Ces zones présentent alors une réponse vibratoire différente de celle de zones pour lesquelles le terrain encaissant apporte une masse résistante complémentaire. De cette façon, on peut détecter des vides derrière une paroi par la mise en évidence de zones "sonnant creux".

Le module autonome 30 peut avantageusement contenir un moyen susceptible de détecter de telles zones de discontinuité par analyse de la réponse vibratoire de la paroi de la canalisation.

Par exemple, une onde de choc peut être émise par le module autonome en direction de la paroi de la canalisation par un dispositif du type de celui utilisé pour la fragmentation de calculs. Un élément sensible à la vibration de retour de type céramique piézo-électrique peut en outre enregistrer ces caractéristiques. Cette émission-réception peut se faire périodiquement en temps ou en distance parcourue ou bien sur ordre parvenu au module autonome.

Le module autonome 30 peut aussi comprendre, par exemple dans son étage 39, des moyens de mesure de la pression statique dans la canalisation. La mesure de pression totale peut permettre, sur le modèle de fonctionnement d'un tube de Pitot, d'estimer la vitesse du module autonome relativement au fluide et la pression absolue de celui-ci.

Cette information couplée à des mesures de vitesse du fluide et à des mesures de position dans la canalisation peut permettre d'établir par calcul le profil en long de la canalisation (élévation de la canalisation).

Elle pourrait permettre notamment de détecter des mauvais profils consécutifs à une mauvaise pose de la canalisation, ou des tassements de la canalisation, qui sont des problèmes structurels affectant fortement la durée de vie de la canalisation.

Le module autonome 30 peut encore comprendre, par exemple dans son étage 39, un ou plusieurs magnétomètres capables de détecter la présence d'éléments magnétiques par exemple en acier, tels que des joints ou vannes.

Ces mesures, horodatées et mémorisées, peuvent ensuite permettre de localiser ces particularités de la canalisation ou du réseau de canalisations en abscisse curviligne.

Ainsi, avec les moyens de mesure avantageusement embarqués dans le module autonome, il est possible, moyennant un recalage temporel puis linéaire de toutes les données, de connaître pour la ou les canalisations à l'intérieur desquelles le module autonome s'est déplacé :

- les caractéristiques géométriques de la ou des canalisations (diamètre, ovalisation, encrassement, entartrage), avec une précision dépendant du nombre de sonars ; et/ou

- les caractéristiques de rugosité interne et en particulier l'emboîtement d'éléments de canalisation ; et/ou

- le tracé en plan et en élévation de la ou des canalisations ; et/ou

- la présence d'élément magnétique dans la ou les canalisations ; et/ou

- la pression en divers points de la ou des canalisations ; et/ou

- la vitesse d'écoulement en divers points de la ou des canalisations (par composition de la vitesse du module autonome et de la mesure de pression et la connaissance de la section).

L'obtention d'autres informations est bien sûr envisageable également.

Comme cela a été évoqué plus haut, le module autonome 30 peut comprendre, par exemple au sein de son étage 37, des moyens d'émission et/ou de réception de signaux par exemple sonores.

Avantageusement, le module autonome 30 embarque des moyens de réception et de compréhension de signaux d'ordre venant d'un point d'accès. Ces signaux peuvent être des signaux sonores, électromagnétiques (par exemple radio) ou autres.

A titre d'exemple, le point d'accès 8 peut inclure un émetteur de signal sonore dans le fluide 28. Le son émis a un contenu fréquentiel spécifique à l'ordre qui lui est associé, de sorte que l'ordre soit univoque quand il est reçu par le module autonome et ne soit pas comparable avec tout autre son résultant d'une fuite ou de la gestion du réseau (écoulement, coup de bélier, etc.).

Les ordres peuvent concerner par exemple :

- un changement de direction ou d'altitude ; et/ou

- une demande d'émission de son spécifique depuis le module autonome ; et/ou

- une augmentation de la puissance d'émission depuis le module autonome ; et/ou

- un changement des conditions d'enregistrement.

D'autres informations sont bien sûr envisageables également. Ainsi, toute information susceptible de modifier le mode de fonctionnement en cours du module autonome peut être envisagée.

Suite à la réception d'un ordre, le module autonome peut éventuellement envoyer en retour un signal sonore d'accusé de réception. On peut ainsi être sûr que l'ordre émis a bien été reçu et donc, a priori, exécuté.

La réception du son d'un émetteur de repère par le module autonome peut également permettre le recalage de son avance.

D'autres émetteurs peuvent être installés de loin en loin sur ou dans la canalisation.

Les moyens de réception de signaux sonores peuvent être les mêmes que les moyens d'acquisition de données utilisés pour détecter une fuite ou obtenir d'autres informations relativement à la canalisation. Un même micro peut par exemple remplir ces deux fonctions. En variante, ces moyens pourraient être distincts.

Avantageusement, le module autonome 30 embarque des moyens d'émission de signaux. Comme pour la réception, les signaux émis peuvent être des signaux sonores, électromagnétiques (par exemple radio) ou autres.

A titre d'exemple, les signaux peuvent être des sons caractéristiques. Les moyens d'émission sont par exemple agencés de sorte que les sons émis puissent être interprétés sans ambigüité par un système de réception.

Selon un mode de fonctionnement, le ou les systèmes de réception sont placés à l'intérieur de la canalisation, par exemple près d'un point d'accès ou le long du tracé de la canalisation. Ils reçoivent par le canal acoustique du fluide un bip régulier émis par le module autonome.

Quand le module autonome avance dans le tuyau, le son est reçu par un récepteur situé près du point d'accès par lequel ce module a été introduit dans la canalisation, avec des intervalles de temps croissants. Cette élévation du temps résulte de l'éloignement de module autonome et permet de mesurer la distance du module autonome au récepteur (effet Doppler). Cette élévation peut aussi résulter de la différence de vitesse de transmission dans le fluide.

Si ces intervalles de temps restent constants, c'est que le module autonome est bloqué.

S'ils diminuent, cela correspond à une diminution de la vitesse moyenne du fluide entre le module autonome et le récepteur. Cette situation ne peut être se produire que par une action volontaire (réduction de débit) d'un opérateur, qui est connue par ailleurs et directement interprétable.

Cette analyse (vérification de l'intervalle de temps) peut donc constituer une information de bon avancement / retour du module autonome, qui peut être complémentaire ou alternative à celle procurée par la mesure de déroulement / enroulement du câble.

Le signal par exemple sonore émis par le module autonome est avantageusement caractéristique d'un de ses états. Le fonctionnement est alors similaire à celui de l'envoi d'ordre mentionné plus haut. Ce son est éventuellement tel qu'il ne peut être confondu avec un bip d'avancement, par son contenu fréquentiel par exemple.

Ainsi, un son émis par le module autonome peut caractériser :

- la bonne réception d'une consigne ; et/ou

- l'impossibilité d'accomplir cette consigne ; et/ou

- un état simple ; et/ou

- une alerte sur la capacité de la batterie ; et/ou

- une alerte sur la capacité de la mémoire ; et/ou

- un coincement (e.g. selon un algorithme d'auto diagnostic) ; et/ou

- une valeur ou une classe d'effort de traction sur le câble.

D'autres situations peuvent bien sûr donner lieu à l'émission d'un son caractéristique.

Selon un autre mode de fonctionnement, déjà évoqué plus haut, les signaux par exemple sonores émis par le module autonome peuvent être perçus depuis l'extérieur de la canalisation. Ceci peut être réalisé à l'aide de moyens appropriés, tels qu'un micro qui peut être placé sur l'extérieur de la canalisation. Compte tenu de l'atténuation, le son est alors perçu seulement au voisinage du micro, à son approche ou son éloignement. Dans ce cas, le micro constitue un repère d'avancement.

Le son peut aussi être suivi depuis l'extérieur de la canalisation, par un opérateur disposant d'un micro mobile ou autre système de réception. Dans le cas d'une canalisation enterrée, si l'émission est assez puissante pour traverser les différentes interfaces de la canalisation et du sol, on peut alors suivre le déplacement du module autonome.

Dans ce mode de fonctionnement également, le signal, par exemple sonore, émis peut consister en un simple bip et/ou être caractéristique d'une information que le module autonome souhaite transmettre.

Une fois que le module autonome 1 (ou 30) a fini sa course à l'intérieur de la canalisation 4, par exemple parce que le lien mécanique 2 a été entièrement débité depuis la bobine 5, on fait avantageusement sortir le module autonome 1 (ou 30) de la canalisation 4.

Cette récupération peut se faire en tirant sur le lien mécanique 2, par exemple en le rembobinant sur la bobine 5, jusqu'à ce que le module autonome 1 (ou 30) soit sorti de la canalisation 4 à travers le point d'accès 8. Le dispositif 7 mentionné plus haut peut contribuer à exercer la traction nécessaire sur le lien mécanique 2. Lors du retour, le lien mécanique 2 est toujours tendu car toutes les forces résultantes des frottements, que ce soit du lien mécanique 2 sur la canalisation 4 ou du fluide 28 sur le lien mécanique 2 s'opposent à ce mouvement.

Grâce à cette récupération, le module autonome 1 (ou 30) peut être réutilisé ultérieurement. De plus, puisque ce module autonome 1 (ou 30) ne reste pas à l'intérieur de la canalisation 4, il ne risque pas de boucher cette dernière, ni éventuellement de polluer le fluide 28 qu'elle contient.

Lors de la circulation du module autonome 1 (ou 30) à l'intérieur de la canalisation 4, en sens inverse du flux de fluide 28, par effet de la traction sur le lien mécanique 2, une acquisition et une mémorisation de données peuvent être réalisées selon les mêmes principes que ceux décrits plus haut. On peut ainsi disposer d'une double acquisition, selon les deux sens de circulation du module autonome 1 (ou 30) à l'intérieur de la canalisation 4.

Bien sûr, une simple acquisition dans un seul des deux sens de circulation du module autonome 1 (ou 30) à l'intérieur de la canalisation 4 pourrait être mise en oeuvre.

La longueur du lien mécanique extraite de la canalisation par traction peut être mesurée à l'aide de moyens appropriés qui peuvent être ou non les mêmes que les moyens de mesure 6 décrits plus haut.

Une fois que le module autonome 1 (ou 30) a été sorti de la canalisation 4, une analyse des données qu'il a acquises et mémorisées peut être effectuée. Cette analyse est donc postérieure à l'acquisition des données, contrairement à l'analyse en temps réel prévue par la solution Sahara décrite en introduction.

Cette analyse des données peut être faite selon des techniques traditionnelles.

Lorsque les données acquises et mémorisées sont des données acoustiques, cette analyse postérieure peut par exemple consister à détecter des sons caractéristiques d'une fuite de fluide au sein de ces données, tels que des sons correspondant à une fréquence particulière.

Lorsque les données acquises et mémorisées comprennent des données visuelles, une analyse de la lumière perçue peut par exemple être réalisée.

Bien sûr, d'autres types d'analyse peuvent être envisagés en fonction du mode d'acquisition des données effectuées par le module autonome 1 (ou 30).

Lorsqu'une horloge interne 13 du module autonome 1 synchronisée avec une horloge externe a été utilisée comme décrit précédemment, on est capable de mettre en correspondance les différents événements détectés à l'aide des données acquises et mémorisées et la position géographique du module autonome 1 (qui a par exemple été obtenue par mesure de la longueur du lien mécanique 2 introduite à l'intérieur de la canalisation 4, à l'aide de la même référence temporelle, comme décrit plus haut).

Par la suite, une excavation de la portion de la canalisation 4 où une fuite de fluide a été détecté peut être réalisée, en vue d'une analyse complémentaire par un opérateur et/ou une réparation si cela s'avère nécessaire.

D'autres actions sont également envisageables selon le type d'informations recueillies relativement à la canalisation considérée.

Diverses mesures optionnelles pour améliorer la circulation du module autonome 1 (ou 30) à l'intérieur de la canalisation 4 vont être décrites ci-après.

Il existe trois états possibles du module autonome 1 (ou 30), lorsqu'il se situe à l'intérieur de la canalisation 4 transportant le flux de fluide 28.

En temps normal, le module autonome 1 (ou 30) avance à l'intérieur de la canalisation 4, poussé par le flux de fluide 28. Dans ce cas, sa vitesse absolue est inférieure ou égale à celle du fluide. En d'autres termes, sa vitesse relativement au flux est faible.

Il peut aussi arriver que le module autonome 1 (ou 30) ne bouge pas ou pratiquement pas, c'est-à-dire que sa vitesse absolue soit proche de zéro. Ce comportement n'est pas normal et indique que le module autonome 1 (ou 30) est vraisemblablement bloqué.

Ce blocage peut être dû à un obstacle situé à l'intérieur de la canalisation 4, ou bien aux frottements du lien mécanique 2 dont l'intensité surpasse la force résultant de la poussée exercée par le fluide 28. Dans ce cas, la vitesse du module autonome 1 (ou 30) relativement au flux 28 est négative.

Le module autonome 1 (ou 30) peut passer de l'état où il avance, poussé par le flux de fluide 28, à l'état où il ne bouge plus, soit de manière brutale, soit après une phase de transition où la vitesse absolue du module autonome 1 (ou 30) diminue progressivement.

Un troisième état apparaît lorsque le module autonome 1 (ou 30) revient en sens inverse de la poussée du flux de fluide 28, entraîné par une traction du lien mécanique 2 depuis l'extérieur de la canalisation 4. Dans ce cas, la vitesse absolue du module autonome 1 (ou 30) est relativement importante, car elle doit vaincre la force de poussée du flux de fluide 28.

Si on raisonne en vitesse relative au flux de fluide 28, la vitesse (négative) du module autonome 1 (ou 30) est plus importante que dans l'état où le module autonome 1 (ou 30) est bloqué.

En première approximation, on peut considérer que la force exercée sur le module autonome 1 (ou 30) dépend de son coefficient de forme, de son maître-couple (c'est-à-dire de sa surface transversale) et du carré de sa vitesse relativement au flux de fluide 28.

Ainsi, si le coefficient de forme et le maître-couple du module autonome 1 (ou 30) ne changent pas, la force exercée sur le module autonome 1 (ou 30) varie en fonction de sa vitesse relativement au flux de fluide 28. Cette force est donc faible quand le module autonome 1 (ou 30) avance dans le sens du flux de fluide 28. Elle augmente si le module autonome 1 (ou 30) est bloqué et, plus encore, lorsque le module autonome 1 (ou 30) revient en sens inverse du flux de fluide 28.

En prenant des mesures dont des exemples seront décrits ci-après, on peut avantageusement faire en sorte que la force exercée sur le module autonome 1 (ou 30) soit faible quand il avance normalement ainsi que lorsqu'il revient en sens inverse du flux de fluide 28, et soit plus importante quand il est arrêté. De cette façon, le module autonome 1 (ou 30) peut avancer facilement en temps normal, mais également lorsqu'il est tiré en sens inverse du flux de fluide 28. En outre, l'importance de la force exercée sur le module autonome 1 (ou 30), lorsque celui-ci est bloqué, est de nature à permettre son déblocage.

En d'autres termes, le module autonome 1 (ou 30) est agencé, dans ce mode de réalisation, pour que le flux de fluide 28 lui offre une résistance maximale lorsque sa vitesse est proche de zéro.

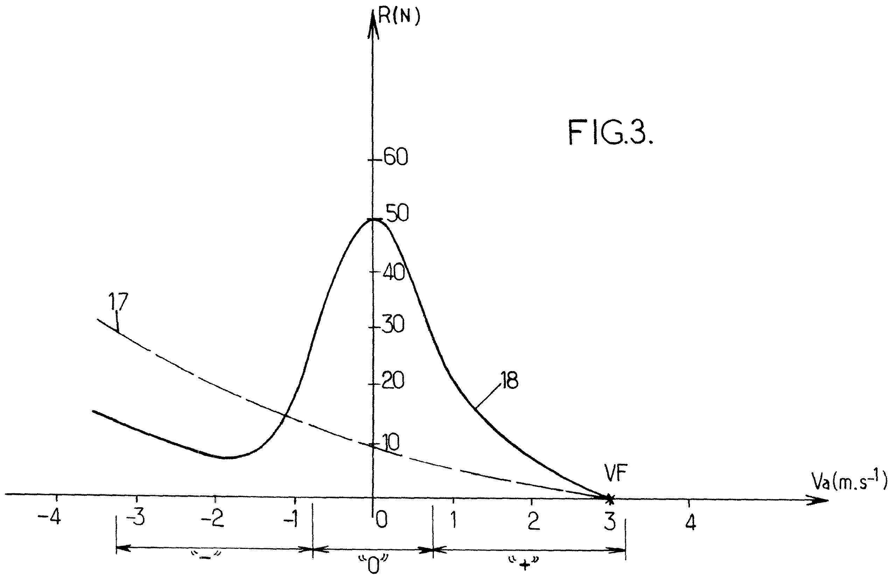

Le graphique de la figure 3 illustre cette situation à l'aide de courbes tracées dans un repère dont l'ordonnée correspond à la résistance passive du flux de fluide 28 sur le module autonome 1 (ou 30), exprimée en Newton, et dont l'abscisse correspond à la vitesse absolue du module autonome 1 (ou 30), exprimée en mètres par seconde.

Les valeurs positives de la vitesse correspondent à une progression du module autonome 1 (ou 30) à l'intérieur de la canalisation 4, dans le sens du flux de fluide 28, tandis que les valeurs négatives de cette vitesse correspondent à une progression en sens inverse.

Les courbes de la figure 3 ont été obtenues en utilisant l'expression suivante de la résistance passive R du flux de fluide 28 sur le module autonome 1 (ou 30):

$$R = 1/2.Cx.d.S.V^2,$$

où Cx désigne le coefficient de traînée du module autonome 1 (ou 30), d désigne la densité du fluide 28, S désigne le maître-couple du module autonome 1 (ou 30) et V désigne la vitesse relative du module autonome 1 (ou 30) par rapport au flux de fluide 28.

Pour tracer les courbes de la figure 3, des valeurs typiques des différents paramètres mentionnés dans la formule ci-dessus ont été utilisées.

On notera aussi que la vitesse Va utilisée sur la figure 3 est la vitesse absolue du module autonome 1 (ou 30), par opposition à la vitesse relative V par rapport au flux de fluide 28 mentionnée dans la formule ci-dessus. Cela étant, lorsque le flux de fluide 28 a une vitesse sensiblement constante, les vitesses absolue Va et relative V du module autonome 1 (ou 30) se correspondent, à cette vitesse de flux de fluide 28 près.

La courbe 17 représente la résistance opposée par le flux de fluide 28 à la progression du module autonome 1 (ou 30), en l'absence de toute mesure particulière. Cette résistance est d'autant plus forte que le module autonome 1 (ou 30) avance vite dans un sens inverse à celui du flux de fluide 28. A l'inverse, elle est de plus en plus faible à mesure que la vitesse du module autonome 1 (ou 30) augmente dans le sens du flux de fluide 28, jusqu'à s'annuler lorsque la vitesse absolue du module autonome 1 (ou 30) atteint la vitesse Vf du flux de fluide.

La courbe 18, quant à elle, correspond à un module autonome agencé selon le mode de réalisation avantageux mentionné plus haut.

Cette courbe 18 fait apparaître une résistance R décroissante au fur et à mesure que la vitesse absolue du module autonome 1 (ou 30) augmente, jusqu'à s'annuler lorsque cette vitesse atteint celle du flux de fluide Vf (partie " + " de la courbe 18). Ceci traduit une résistance relativement faible lorsque le module autonome 1 (ou 30) avance normalement à l'intérieur de la canalisation 4.

De l'autre côté de la courbe (partie " - " de la courbe 18), on constate aussi une résistance relativement faible pour des valeurs négatives de la vitesse absolue du module autonome 1 (ou 30).

Lorsque la vitesse absolue du module autonome 1 (ou 30) est proche de zéro (partie intermédiaire " 0 " de la courbe 18), la résistance R est plus importante. Elle atteint même son maximum lorsque Va est égal à zéro, c'est-à-dire lorsque le module autonome 1 (ou 30) est immobile.

Les courbes 17 et 18 sont données à titre illustratif uniquement. En particulier, leur nature continue n'est pas limitative, des valeurs discrètes de la résistance R en fonction de la vitesse Va pouvant également être envisagées. De même, les valeurs portées sur le repère peuvent varier selon les caractéristiques du système et de certaines hypothèses, et ne constituent donc aucunement une limitation.

Il existe de nombreuses façons d'obtenir le comportement symbolisé par la courbe 18 plutôt que par la courbe 17, pour un module autonome 1 (ou 30).

Selon un premier moyen, le module autonome 1 (ou 30) est agencé pour présenter une surface transversale (maître-couple) vis-à-vis du flux de fluide 28 maximale lorsque sa vitesse est proche de zéro.

Ceci peut être réalisé par un déplacement du module autonome 1 (ou 30) par rapport à un axe longitudinal de la canalisation 4. En alternative ou en complément, ce comportement peut être obtenu par une modification de la forme du module autonome 1 (ou 30).

Les figures 4a à 4e présentent un exemple de configuration du module autonome 1 (ou 30) qui permet d'obtenir un comportement correspondant à la courbe 18 de la figure 3. Les différentes figures correspondent à des situations où la vitesse du module autonome 1 (ou 30) varie.

Cette configuration consiste à relier le module autonome 1 (ou 30) au lien mécanique 2 par l'intermédiaire d'un arceau rigide 15 et d'un ressort de rappel 16 dont le rôle est d'entraîner le module autonome 1 (ou 30) dans la position montrée à la figure 4a. La force exercée par le ressort de rappel peut cependant être vaincue par une force contraire suffisante.

Sur la figure 4a, on considère que le module autonome 1 avance normalement à l'intérieur de la canalisation 4, à une vitesse V1 inférieure ou égale à celle du flux de fluide 28. Dans cette situation, la surface transversale S1 vis-à-vis du flux de fluide 28 est égale à la hauteur du module autonome 1. Cette surface est alors minimale.

Sur la figure 4b, le module autonome 1 perd de la vitesse, par exemple suite à des frottements se produisant entre le lien mécanique 2 et l'intérieur de la canalisation 4. La vitesse V2 du module autonome 1 est alors inférieure à la vitesse V1 qu'il avait à l'étape précédente.

Cette diminution de la vitesse absolue du module autonome 1 provoque l'augmentation de la résistance du flux de fluide 28 sur le module autonome 1, comme cela apparaît sur la courbe 18 de la figure 3. L'augmentation de cette résistance, est de nature à vaincre la force du ressort 16, ce qui provoque un soulèvement du module autonome 1. Ce soulèvement peut d'ailleurs être facilité en utilisant par exemple une ailette à cet effet.

Le soulèvement du module autonome 1 entraîne une augmentation du coefficient de forme et du maître-couple du module autonome 1. La surface transversale S2 du module autonome 1 vis-à-vis du flux de fluide 28 est alors supérieure à S1.

Ceci provoque une augmentation de la force de poussée exercée par le flux de fluide 28 sur ce module autonome 1. La conséquence en est une augmentation de la vitesse absolue du module autonome 1 si cela est possible.

Ainsi, l'éventuel frottement du lien mécanique 2 avec l'intérieur de la canalisation 4 peut être surmonté et la progression du module autonome 1 (ou 30) à l'intérieur de la canalisation 4 dans le sens du flux de fluide 28 peut se poursuivre.

La figure 4c correspond à une situation de blocage du module autonome 1 à l'intérieur de la canalisation 4. Dans ce cas, la vitesse V3 du module autonome 1 est proche de zéro.

Dans cette situation, le module autonome 1 se met en position verticale sous l'effet de la poussée exercée par le flux de fluide 28. Il présente alors une surface transversale S3 maximale vis-à-vis du flux de fluide 28.

Ceci correspond à une résistance maximale du flux de fluide 28, conformément à ce qui a été décrit en référence à la courbe 18 de la figure 3 (partie " 0 ").

Cette situation provoque une poussée maximale sur le module autonome 1, qui est de nature à le relancer dans sa progression, ou bien à le faire basculer dans l'autre sens comme cela est décrit ci-après en référence à la figure 4d.

La figure 4d correspond en effet à un cas où une traction est exercée sur le lien mécanique 2, dans le but de faire sortir le module autonome 1 de la canalisation 4.

Dans ce cas, la vitesse absolue V4 du module autonome 1 n'est plus proche de zéro. Le module autonome 1 bascule vers la gauche, offrant ainsi une section transversale S2 vis-à-vis du flux de fluide 28 plus faible. En conséquence, la résistance du flux de fluide 28 sur le module autonome 1 diminue.

Au cours du retour du module autonome 1, ce dernier peut se placer comme indiqué sur la figure 4e. Dans ce cas, la section transversale S1 vis-à-vis du flux de fluide 28 est à nouveau minimale et la résistance opposée est donc faible.

La circulation du module autonome 1 à l'intérieur de la canalisation 4, en sens inverse du flux de fluide 28, est alors facilitée.

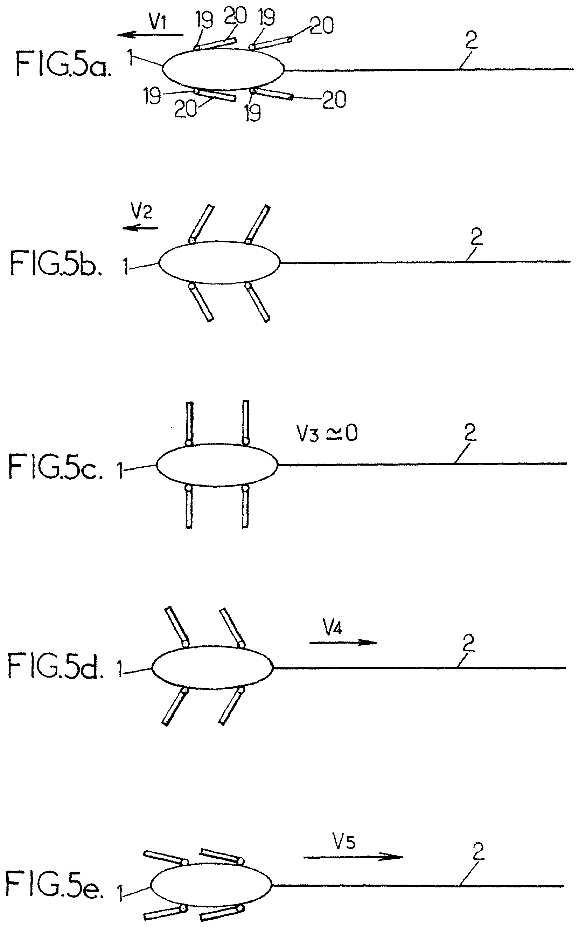

Les figures 5a-5e montrent un autre type d'agencement du module autonome 1 permettant d'obtenir un comportement correspondant à la courbe 18 de la figure 3.

Dans cette configuration, le module autonome 1 comporte un certain nombre d'écailles élastiques 20, fixées au corps du module autonome 1 par l'intermédiaire de ressorts de rappel respectifs 19.

On notera que tout autre élément de surface pourrait être utilisé, en complément ou en remplacement de telles écailles élastiques.

Par l'effet des ressorts 19, les écailles 20 se placent contre le corps du module autonome 1 lorsque ce module autonome 1 se déplace dans le sens du flux de fluide 28 (figure 5a).

Ces écailles 20 se déploient lorsque la vitesse du module autonome 1 diminue (figure 5b).

Elles sont entièrement déployées, et présentent donc une surface maximale vis-à-vis du flux de fluide 28, lorsque le module autonome 1 a une vitesse proche de zéro (figure 5c).

Un retour en sens inverse du module autonome 1 vainc la force de rappel des ressorts 19 et fait basculer les écailles élastiques en direction du corps du module autonome 1 (figure 5d), jusqu'à ce que ces écailles soient placées contre le corps du module autonome 1 (figure 5e).

Du fait de cet agencement, la surface transversale présentée par le module autonome 1 vis-à-vis du flux de fluide 28 est maximale lorsque la vitesse du module autonome 1 est proche de zéro (figure 5c).

Le module autonome 30 muni d'écailles 43 fonctionnant de façon similaire apparaît sur les figures 9a (écailles 43 placées contre le corps du module autonome 30) et 9b (écailles 43 déployées).

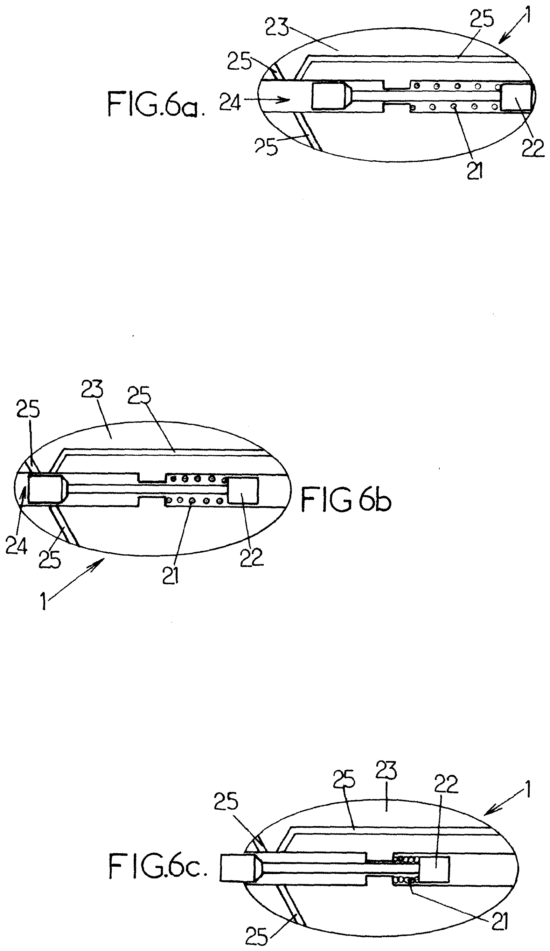

Selon un autre moyen, dont un exemple est illustré sur les figures 6a à 6c, le module autonome 1 (ou 30) peut se conformer au comportement décrit en référence à la courbe 18 de la figure 3, par usage de moyens hydrauliques de distribution de fluide.

Dans l'exemple illustré, le module autonome 1 comprend des passages 25 pour le fluide 28, disposés dans le corps 23 du module autonome 1, ainsi qu'un élément de distribution mobile 22 placé dans un logement 24 du module autonome 1.

Sur la figure 6a, la vitesse du module autonome 1 est proche de celle du flux de fluide 28. Dans cette situation, l'élément de distribution 22 est dans une position où il laisse ouverts les passages 25.

Sur la figure 6b, la vitesse du module autonome 1 a diminué par rapport à la figure 6a. L'élément de distribution mobile 22 est poussé vers la gauche contre un ressort 21, par effet de la force exercée par le flux de fluide 28.

Dans cette nouvelle position, l'élément de distribution mobile 22 ferme tout ou partie des passages 25. Il en résulte une nouvelle augmentation de la poussée, qui provoque une augmentation de la vitesse absolue du module autonome 1 (ou 30). Ceci peut éventuellement entraîner un déblocage du module autonome 1 (ou 30) si besoin est.

Sur la figure 6c, le module autonome 1 est tiré dans le sens inverse au flux de fluide 28, ce qui provoque un nouveau déplacement de l'élément de distribution mobile 22 vers la gauche. Dans cette situation, les passages 25 sont à nouveau ouverts, entraînant ainsi une diminution de la résistance du flux de fluide 28 sur le module autonome 1.

Bien sûr, d'autres mesures peuvent être envisagées en remplacement ou en complément de celles qui viennent d'être décrites pour obtenir un comportement conforme à la courbe 18 de la figure 3, ou tout comportement similaire.

Avantageusement, le lien mécanique 2 lui-même peut être agencé pour limiter les forces de frottement avec le fluide 28 et/ou avec l'intérieur de la canalisation 4. Cela permet de soulager le module autonome 1 (ou 30) du poids qu'il a à tirer.

Pour ce faire, le lien mécanique 2 peut être doté de moyens pour que le flux de fluide 28 lui offre une résistance maximale lorsque sa vitesse de déplacement à l'intérieur de la canalisation 4 est proche de zéro.

De tels moyens peuvent être identiques ou similaires à ceux qui ont été décrits plus haut pour le module autonome 1 (ou 30).

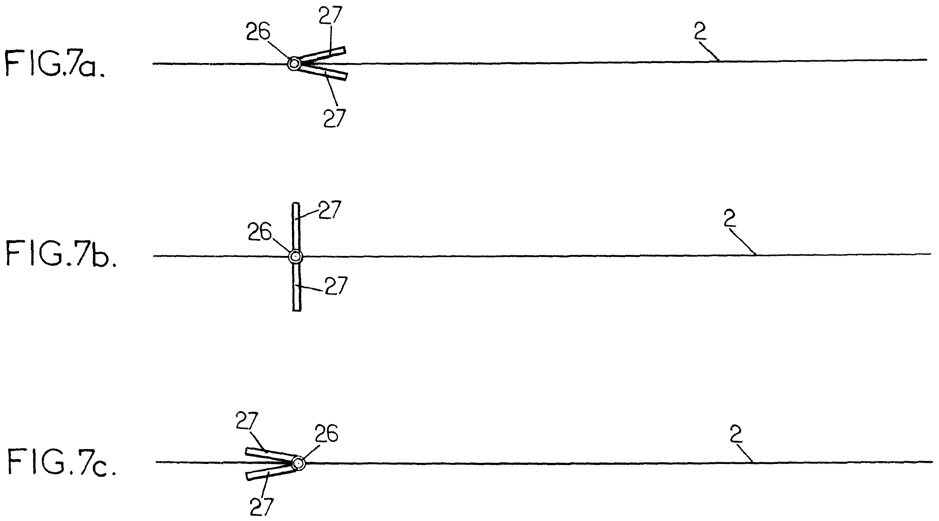

Ainsi, sur les figures 7a et 7b, le lien mécanique 2 est par exemple doté d'éléments de surface 27, tels qu'une forme souple pliée contre le lien mécanique 2 à l'aide d'un ressort 26. De tels éléments de surface 27 peuvent être disposés à différents endroits le long du lien mécanique 2.

Lorsque la vitesse du lien mécanique 2 est non nulle, soit par effet de la progression du module autonome 1 (ou 30) à l'intérieur de la canalisation 4 dans le sens du flux de fluide 28 (figure 7a), soit par traction du lien mécanique 2 depuis l'extérieur de la canalisation 4 (figure 7c), ces éléments de surface 27 restent sensiblement contre le lien mécanique 2 par effet du ressort 26 ou, au contraire, parce que la force exercée par ce ressort a été vaincue.

En revanche, lorsque la vitesse du lien mécanique 2 est proche de zéro, par exemple parce que le module autonome 1 (ou 30) auquel il est relié est bloqué ou par effet du frottement avec l'intérieur de la canalisation 4, les éléments de surface 27 sont déployés (figure 7b), offrant ainsi une résistance maximale au flux de fluide 28. Grâce à cette forme dépliée, la poussée du flux de fluide 28 sur le lien mécanique 2 augmente et peut éventuellement lui redonner de la vitesse.

Là encore, des variantes de configuration du lien mécanique 2 peuvent bien sûr être envisagées.

## Revendications

**1.** Système pour obtenir des informations relativement à une canalisation (4) transportant un flux de fluide (28) et/ou relativement au fluide, le système comprenant :

    - un module autonome (1;30) en termes d'enregistrement de données et d'alimentation en énergie, comprenant des moyens d'acquisition (10) de données dont une analyse postérieure permet l'obtention d'informations relativement à la canalisation et/ou au fluide et des moyens de mémorisation (11) des données acquises par lesdits moyens d'acquisition de données, le module autonome étant agencé pour être poussé par le flux de fluide après avoir été introduit à l'intérieur de la canalisation, et

- un lien mécanique (2) relié au module autonome et accessible depuis l'extérieur de la canalisation, ledit lien mécanique étant dénué de propriétés pour transmettre des données acquises par le module autonome vers l'extérieur de la canalisation et pour fournir de l'énergie au module autonome depuis l'extérieur de la canalisation.

2. Système selon la revendication 1, dans lequel le module autonome (1;30) comprend des moyens d'émission et/ou de réception de signaux.

3. Système selon l'une quelconque des revendications précédentes, dans lequel le module autonome (1;30) comprend des moyens de mesure d'effort de traction entre le module autonome et le lien mécanique (2).

4. Système selon l'une quelconque des revendications précédentes, dans lequel le module autonome (1;30) comprend des moyens de détection de position par rapport à au moins une paroi intérieure de la canalisation (4).

5. Système selon l'une quelconque des revendications précédentes, dans lequel le module autonome (1;30) comprend des moyens de déplacement dans le sens de la hauteur et/ou de la largeur de la canalisation (4).

6. Système selon l'une quelconque des revendications précédentes, dans lequel le module autonome (1;30) comprend l'un au moins parmi : une centrale inertielle, des moyens de mesure de pression, des moyens de mesure de vitesse et un magnétomètre.

7. Système selon l'une quelconque des revendications précédentes, dans lequel le module autonome (1;30) comprend une horloge interne (13) synchronisée avec une horloge externe située à l'extérieur de la canalisation (4) et servant de référence temporelle.

8. Système selon l'une quelconque des revendications précédentes, dans lequel le module autonome (1;30) est agencé pour que, après avoir été introduit à l'intérieur de la canalisation (4), le flux de fluide (28) lui offre une résistance variable en fonction de sa vitesse relative par rapport au fluide.

9. Système selon l'une quelconque des revendications précédentes, dans lequel le module autonome (1;30) comprend un système de génération de courant embarqué, par exemple une batterie rechargeable.

10. Système selon l'une quelconque des revendications précédentes, dans lequel le lien mécanique (2) est doté de moyens pour que, lorsqu'il est à l'intérieur de la canalisation (4), le flux de fluide (28) lui offre une résistance variable en fonction de sa vitesse relative par rapport au fluide.

11. Système selon l'une quelconque des revendications précédentes, dans lequel le lien mécanique (2) a une longueur de l'ordre de la dizaine de kilomètres.

12. Système selon l'une quelconque des revendications précédentes, comprenant en outre des moyens de poussage du lien mécanique (2) à l'intérieur de la canalisation (4), agencés pour vaincre des efforts résultant d'un frottement du lien mécanique à l'intérieur de la canalisation.

13. Système selon l'une quelconque des revendications précédentes, comprenant des moyens (6) pour mesurer la longueur du lien mécanique (2) introduite à l'intérieur de la canalisation (4) au fur et à mesure que le module autonome (1;30) est poussé par le flux de fluide (28) et/ou des moyens pour mesurer la longueur du lien mécanique extraite de la canalisation par traction.

14. Procédé pour obtenir des informations relativement à une canalisation (4) transportant un flux de fluide (28) et/ou relativement au fluide, à l'aide d'un système selon l'une quelconque des revendications précédentes, le procédé comprenant les étapes suivantes :

- introduire à l'intérieur de la canalisation, un module autonome (1;30) en termes d'enregistrement de données et d'alimentation en énergie, comprenant des moyens d'acquisition (10) de données dont une analyse postérieure permet l'obtention d'informations relativement à la canalisation et/ou au fluide et des moyens de mémorisation (11) des données acquises par lesdits moyens d'acquisition de données, un lien mécanique (2) accessible depuis l'extérieur de la canalisation étant relié au module autonome, ledit lien mécanique étant dénué de propriétés pour transmettre des données acquises par le module autonome vers l'extérieur de la canalisation et pour fournir de l'énergie au module autonome depuis l'extérieur de la canalisation ; et

- acquérir des données à l'aide desdits moyens d'acquisition de données et mémoriser lesdites données à l'aide desdits moyens de mémorisation, pendant que le module autonome est poussé par le flux de fluide.

15. Procédé selon la revendication 14, dans lequel les informations obtenues relativement à la canalisation (4) concernent la détection d'une fuite dans ladite canalisation et/ou de caractéristiques de ladite canalisation, telles qu'un diamètre, une ovalisation, un encrassement interne, un entartrage interne, une discontinuité d'une surface interne de la canalisation, une cohérence d'un terrain encaissant, une ouverture de joints, un profil en plan et/ou en élévation, une présence d'élément magnétique, une pression interne, et/ou une vitesse d'écoulement de fluide.

**Patentansprüche**

1. System zur Gewinnung von Informationen betreffend eine einen Fluidfluss (28) transportierende Röhre (4) und/oder betreffend das Fluid, wobei das System aufweist:

   - ein hinsichtlich Datenaufzeichnung und Energieversorgung autonomes Modul (1; 30) mit Datenerfassungseinrichtungen (10) zum Erfassen von Daten, deren spätere Analyse die Gewinnung von Informationen betreffend die Röhre und/oder betreffend das Fluid erlaubt, und Datenspeichereinrichtungen (11) zum Speichern von Daten, die von den Datenerfassungseinrichtungen erfasst worden sind, wobei das autonome Modul konfiguriert ist, von dem Fluidfluss vorangetrieben zu werden, nachdem es ins Innere der Röhre eingeführt worden ist, und
   - ein mechanisches Verbindungsglied (2), das an dem autonomen Modul angebracht ist und von außerhalb der Röhre zugänglich ist, wobei das mechanische Verbindungsglied keine Fähigkeiten zum Übertragen der von dem autonomen Modul erfassten Daten nach außerhalb der Röhre und zum Versorgen des autonomen Moduls mit Energie von außerhalb der Röhre hat.

2. System nach Anspruch 1, in welchem das autonome Modul (1; 30) Einrichtungen zum Senden und/oder Empfangen von Signalen aufweist.

3. System nach einem der vorstehenden Ansprüche, in welchem das autonome Modul (1; 30) Einrichtungen zum Messen von Zugkräften zwischen dem autonomen Modul und dem mechanischen Verbindungsglied (2) aufweist.

4. System nach einem der vorstehenden Ansprüche, in welchem das autonome Modul (1; 30) Einrichtungen zum Detektieren seiner Position relativ zu mindestens einer Innenwand der Röhre (4) aufweist.

5. System nach einem der vorstehenden Ansprüche, in welchem das autonome Modul (1; 30) Bewegungseinrichtungen aufweist, um sich in Richtung der Höhe und/oder der Breite der Röhre (4) zu bewegen.

6. System nach einem der vorstehenden Ansprüche, in welchem das autonome Modul (1; 30) mindestens eine der folgenden Komponenten aufweist: eine Trägheitszentrale, Einrichtungen zur Druckmessung, Einrichtungen zur Geschwindigkeitsmessung und ein Magnetometer.

7. System nach einem der vorstehenden Ansprüche, in welchem das autonome Modul (1; 30) eine interne Uhr (13) aufweist, die mit einer außerhalb der Röhre (4) angeordneten externen Uhr synchronisiert ist und als Zeitreferenz dient.

8. System nach einem der vorstehenden Ansprüche, in welchem das autonome Modul (1; 30) konfiguriert ist, so dass, nachdem es ins Innere der Röhre (4) eingeführt ist, der Fluidfluss (28) ihm einen variablen Widerstand bietet, der von seiner Geschwindigkeit relativ zum Fluid abhängt.

9. System nach einem der vorstehenden Ansprüche, in welchem das autonome Modul (1; 30) ein eigenes Stromerzeugungssystem, beispielsweise eine wiederaufladbare Batterie, mit sich führt.

10. System nach einem der vorstehenden Ansprüche, in welchem das mechanische Verbindungsglied (2) mit Einrichtungen ausgestattet ist, so dass, wenn es im Innern der Röhre (4) ist, der Fluidfluss (28) ihm einen variablen Widerstand bietet, der von seiner Geschwindigkeit relativ zum Fluid abhängt.

11. System nach einem der vorstehenden Ansprüche, in welchem das mechanische Verbindungsglied (2) eine Länge in der Größenordnung von zehn Kilometern hat.

12. System nach einem der vorstehenden Ansprüche, ferner aufweisend Einrichtungen zum Vorantreiben des mechanischen Verbindungsglieds (2) im Innern der Röhre (4), die konfiguriert sind, Kräfte, die aus einer Reibung des mechanischen Verbindungsglieds im Innern der Röhre resultieren, zu überwinden.

13. System nach einem der vorstehenden Ansprüche, aufweisend Einrichtungen (6) zum Messen der Länge des mechanischen Verbindungsglieds (2), die in dem Maße, wie das autonome Modul (1; 30) von dem Fluidfluss (28) vorangetrieben wird, ins Innere der Röhre eingeführt wird, und/oder Einrichtungen zum Messen der durch Zug aus der Röhre herausgezogenen Länge des mechanischen Verbindungsglieds.

14. Verfahren zur Gewinnung von Informationen betreffend eine einen Fluidfluss (28) transportierende Röhre (4) und/oder betreffend das Fluid mit Hilfe eines Systems nach einem der vorstehenden Ansprüche, wobei das Verfahren die folgenden Schritte aufweist:

- Einführen eines hinsichtlich Datenaufzeichnung und Energieversorgung autonomen Moduls (1; 30) ins Innere der Röhre, wobei das Modul Datenerfassungseinrichtungen (10) zum Erfassen von Daten, deren spätere Analyse die Gewinnung von Informationen betreffend die Röhre und/oder betreffend das Fluid erlaubt, und Datenspeichereinrichtungen (11) zum Speichern von Daten, die von den Datenerfassungseinrichtungen erfasst worden sind, aufweist, wobei ein von außerhalb der Röhre zugängliches mechanisches Verbindungsglied (2) an dem autonomen Modul angebracht ist, wobei das mechanische Verbindungsglied keine Fähigkeiten zum Übertragen der von dem autonomen Modul erfassten Daten nach außerhalb der Röhre und zum Versorgen des autonomen Moduls mit Energie von außerhalb der Röhre hat; und
- Erfassen der Daten mit Hilfe der Datenerfassungseinrichtungen und Speichern der Daten mit Hilfe der Speichereinrichtungen während das autonome Modul von dem Fluidfluss vorangetrieben wird.

15. Verfahren nach Anspruch 14, in welchem die gewonnenen Informationen betreffend die Röhre (4) aufweisen: die Detektion eine Undichtigkeit in der Röhre und/oder Eigenschaften der Röhre, wie ein Durchmesser, eine Unrundheit, eine interne Verunreinigung, eine interne Ablagerung, eine Diskontinuität einer Innenfläche der Röhre, ein Zusammenhalt eines einbettenden Bodens, eine Öffnung von Fugen, ein Planprofil und/oder Höhenprofil, eine Anwesenheit eines magnetischen Elements, ein Innendruck und/oder eine Fluidströmungsgeschwindigkeit.

**Claims**

1. System for obtaining information relating to a pipe (4) conveying a flow of fluid (28), and/or relating to the fluid, the system comprising:

- a module (1; 30) which is self-contained in terms of data storing and energy supply, comprising means (10) of acquiring data, subsequent analysis of which makes it possible to obtain information relating to the pipe and/or the fluid, and means (11) of storing the data which said data acquisition means acquire, the self-contained module being arranged to be pushed by the fluid flow after being introduced into the pipe, and
- a mechanical link (2) which is connected to the self-contained module and accessible from outside the pipe, said mechanical link having no properties for transmitting the data which the self-contained module acquires to outside the pipe, or for supplying energy to the self-contained module from outside the pipe.

2. System according to Claim 1, wherein the self-contained module (1;30) includes means of transmitting and/or receiving signals.

3. System according to any one of the preceding claims, wherein the self-contained module (1;30) includes means of measuring the tensile stress between the self-contained module and the mechanical link (2).

4. System according to any one of the preceding claims, wherein the self-contained module (1;30) includes means of detecting position relative to at least one internal wall of the pipe (4).

5. System according to any one of the preceding claims, wherein the self-contained module (1;30) includes means of movement in the direction of the height and/or width of the pipe (4).

6. System according to any one of the preceding claims, wherein the self-contained module (1;30) includes at least one of: an inertial unit, means of measuring pressure, means of measuring speed and a magnetometer.

7. System according to any one of the preceding claims, wherein the self-contained module (1;30) includes an internal clock (13), which is synchronised with an external clock outside the pipe (4) and used as a time reference.

8. System according to any one of the preceding claims, wherein the self-contained module (1;30) is arranged so that after it is introduced into the pipe (4), the fluid flow (28) offers it variable resistance as a function of its speed relative to the fluid.

9. System according to any one of the preceding claims, wherein the self-contained module (1;30) includes an on board current generation system, e.g. a rechargeable battery.

**10.** System according to any one of the preceding claims, wherein the mechanical link (2) is equipped with means so that when it is inside the pipe (4), the fluid flow (28) offers it variable resistance as a function of its speed relative to the fluid.

**11.** System according to any one of the preceding claims, wherein the length of the mechanical link (2) is of the order of ten kilometres.

**12.** System according to any one of the preceding claims, also including means of pushing the mechanical link (2) into the pipe (4), arranged to overcome the stresses resulting from friction of the mechanical link inside the pipe.

**13.** System according to any one of the preceding claims, including means (6) of measuring the length of the mechanical link (2) which is introduced into the pipe (4) as the self-contained module (1;30) is pushed by the fluid flow (28), and/or means of measuring the length of the mechanical link which is extracted from the pipe by traction.

**14.** Method of obtaining information relating to a pipe (4) conveying a fluid flow (28), and/or relating to the fluid, using a system according to any one of the preceding claims, the method including the following steps:

- introducing into the pipe a module (1;30) which is self-contained in terms of data storing and energy supply, comprising means (10) of acquiring data, subsequent analysis of which makes it possible to obtain information relating to the pipe and/or the fluid, and means (11) of storing the data which said data acquisition means acquire, a mechanical link (2) which is accessible from outside the pipe being connected to the self-contained module, said mechanical link having no properties for transmitting the data which the self-contained module acquires to outside the pipe, or for supplying energy to the self-contained module from outside the pipe; and
- acquiring the data using said data acquisition means and storing said data using said storing means, while the self-contained module is pushed by the fluid flow.

**15.** Method according to Claim 14, wherein the information which is obtained about the pipe (4) relates to detection of a leak in said pipe, and/or characteristics of said pipe such as diameter, ovality, internal fouling, internal furring, discontinuity of an internal surface of the pipe, coherence of surrounding ground, opening of joints, profile in plan and/or elevation, the presence of a magnetic element, internal pressure, and/or speed of fluid flow.

FIG.1.

FIG.2.

FIG.4a.

FIG.4b.

FIG.4c.

FIG.4d.

FIG.4e.

FIG.3.

FIG.5a.

FIG.5b.

FIG.5c.

FIG.5d.

FIG.5e.

FIG.6a.

FIG 6b

FIG.6c.

FIG.7a.

FIG.7b.

FIG.7c.

FIG.8.

FIG. 9a.

FIG.9b.

EP 2 269 022 B1

FIG.10.

FIG.11a.

FIG.11b.

FIG.12.

FIG.13.

FIG.14a.

FIG.14b.

FIG.14c.

FIG.16.

FIG.15a.

FIG.15b.

FIG.15c.

FIG.17.

FIG.18.

FIG.19.

FIG.20.

FIG.21.

FIG.22.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0450814 A
- GB 2379015 A
- FR 2556832
- US 7231812 B